(19) Europäisches Patentamt

European Patent Office

Office européen des brevets

(11) **EP 1 077 536 A2**

(12) **EUROPEAN PATENT APPLICATION**

(43) Date of publication:
21.02.2001 Bulletin 2001/08

(51) Int. Cl.$^7$: **H04B 7/06**, G01S 5/02

(21) Application number: 00117661.9

(22) Date of filing: 16.08.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 19.08.1999 JP 23329999

(71) Applicant: **OMRON CORPORATION**
**Kyoto-shi, Kyoto (JP)**

(72) Inventors:
• **Kawashima, Hidemitsu,**
**c/o Omron Corporation**
**Kyoto-shi, Kyoto (JP)**

• **Toguchi, Yoichi,**
**c/o Omron Corporation**
**Kyoto-shi, Kyoto (JP)**
• **Hisano, Atsushi,**
**c/o Omron Corporation**
**Kyoto-shi, Kyoto (JP)**

(74) Representative:
**Kilian, Helmut, Dr.**
**Wilhelms, Kilian & Partner**
**Patentanwälte**
**Eduard-Schmid-Strasse 2**
**81541 München (DE)**

(54) **Transmitter apparatus and communication method including method of detecting the position of a receiver**

(57) In a communication apparatus and communication method, transmission is carried out using interference waves generated by the interference of electromagnetic waves emitted simultaneously from a plurality of antennas, in which the emission conditions of the electromagnetic waves (e.g., phase, frequency, output level) are changed to create interference antinodes where reception is possible and interference nodes where reception is not possible at prescribed positions in space, and wherein a position detection method for detecting the position of a receiver is carried out based on reception data related to the electric field strength E and the rate of change of E (derivatives of E) at the position of the receiver.

FIG.2

— Wave Antinodes
---- Wave Nodes
● Transmission Source

**EP 1 077 536 A2**

**Description**

## BACKGROUND OF THE INVENTION

### FIELD OF THE INVENTION

The present invention relates to a transmitter apparatus and a communication method including a method of detecting the position of a receiver, and in particular relates to communication technology for enlarging the communication distance (communication area) in wireless communications, for switching to regions capable of communication, and for detecting positions in accordance with electromagnetic signals.

### DESCRIPTION OF THE PRIOR ART

In general, the "diversity" used in a receiver refers to the system in which a plurality of antennas is used to carry out phasing in order to supplement attenuated electromagnetic waves, and this makes it possible to achieve high-quality communication. In addition to prior art phasing, the effects of shadowing and the like can be positively used to achieve improvements, and when these functions are carried out at the transmission side, the term "transmission diversity" is used.

For example, in the system disclosed in Japanese Laid-Open Patent Application No. HEI 9-215051, transmission diversity can be chiefly found in the ability to select the best transmission route by switching between branches. However, because such systems are limited by the best transmission characteristics from each of the prior art antennas or the total combination thereof, there is no fundamental improvement of transmission characteristics.

Further, in prior art communication systems, the communication distance (communication area) is enlarged by increasing the transmission output at the transmission side and increasing the reception strength at the reception side (e.g., by using a high-gain antenna and amplifier, or by improving the S/N ratio).

However, because the electromagnetic waves emitted from the transmitter become weaker as they propagate through space, the strength of the signals decreases exponentially with increasing distance from the transmitter. In other words, the communication distance depends on the transmission output level. Furthermore, because the maximum transmission output level is regulated by radio laws and the like, it has not been possible to make electromagnetic signals reach areas outside the communication area set by such maximum transmission output level.

Further, examples of systems for detecting the position of a communication device include systems which specify areas by means of communication between a mobile station and a small cellular base station such as a PHS (personal handy phone system), systems which derive the position of the mobile station by means of communication with a plurality of satellites such as GPS (global positioning system), and systems which detect positions by measuring the reflected waves from solid objects like that carried out in radar systems. However, position detection by means of PHS, GPS or the like requires an extremely large system that is enormously expensive.

### SUMMARY OF THE INVENTION

In view of the problems of the prior art described above, it is an object of the present invention to provide a transmitter apparatus and a communication method including a method of detecting the position of a receiver which makes it possible to expand the distance over which communication can be carried out, which makes it possible to detect communication devices (transmitter and/or receiver) using a simple structure, and which makes it possible to carry out position detection using electromagnetic waves.

In order to achieve the object stated above, in the communication method according to the present invention, electromagnetic waves are emitted from a plurality of transmission antennas provided in a communication apparatus, and the interference waves created by the interference between the electromagnetic waves emitted from the plurality of antennas is utilized to transmit data.

Further, in order to carry out this communication method, the communication apparatus according to the present invention is equipped with a plurality of transmission antennas, means for creating an electromagnetic wave interference pattern in the surrounding space by the interference of electromagnetic waves emitted from the plurality of antennas, and means for transmitting transmission data to at least one receiver using the interference waves that form the interference pattern.

In the present invention, synchronized transmission signals simultaneously emitted from a plurality of antennas are made to interfere with each other to generate a prescribed standing wave pattern (interference pattern) in free space, and by using the peak portions (antinode portions due to constructive interference) of the electric field strength interference pattern, it is possible to transmit data to regions not reachable with the prior art single antenna transmitter due to the decrease in electric field strength as electromagnetic waves propagate through space, and this makes it possible to expand the communication area. Namely, at the same transmission output level, the multiple antenna communication apparatus according to the present invention has a greater maximum transmission distance than the single antenna transmitter of the prior art.

Preferably, the emission state of the electromagnetic waves emitted from the plurality of antennas is adjusted to change the interference pattern of the interference waves so as to change the regions in space where transmission is possible. For example, the emission state can be changed by changing emission conditions such as the phase, frequency and output level. In this regard, the emission state may be changed by changing at least one of these emission conditions, or by changing emission conditions other than these three conditions so long as this makes it possible to change the emission state.

Further, the communication apparatus of the present invention preferably includes control means (corresponding to the "control circuit 17" in the preferred embodiments) for controlling the emission state of the electromagnetic waves emitted from the plurality of antennas in order to change the interference pattern of the interference waves so as to change the regions in space where transmission is possible.

As described above, in the present invention, interference waves are used to expand the maximum transmission distance. On the other hand, data can not be transmitted to regions positioned at the node portions of the interference pattern. Accordingly, in the case where at least the transmitter or receiver can be moved, it is possible to find a position where the reception sensitivity is good. Further, in the case where neither the transmitter nor the receiver can be moved, the emission state of the electromagnetic waves emitted from the plurality of antennas can be adjusted to change the interference pattern so as to create an interference antinode at the position of the receiver. In this way, an optimum reception environment can be created for the receiver.

Further, an interference pattern can be created based on response signals from the receivers. In the communication apparatus of the present invention, this is achieved by having the emission state control means control the emission state of the electromagnetic waves emitted from the antennas based on response signals from the receivers in order to create an interference pattern which makes it possible for the receivers to receive the transmission data transmitted from the communication apparatus.

In this regard, the response signals from the receivers include data related to the reception state (e.g., the reception level) of the receivers at the time the interference waves were received by the receiver while the interference pattern was being changed. Of course, the "good/bad" reception sensitivity (which can also have three or more rankings instead of these two) need not have a one-to-one correspondence with the reception level.

In this way, when the transmitter receives data related to the reception state of the receivers in the form of response signals, it becomes possible to change the interference pattern to create an optimum reception state (i.e., to create interference antinodes at the positions of the receivers).

Further, in the present invention, the meaning of "based on response signals" includes the case where no response signals are received from the receivers. In other words, in the case where there are response signals, it can be assumed that the electromagnetic waves are reaching the receivers, and in the case where there are no response signals, it can be assumed that the electromagnetic waves are not reaching the receivers. Namely, in the case where no response signals are received despite the fact that data was transmitted to certain receivers, it can be assumed that the electromagnetic waves from the transmitter are not reaching the locations of the receivers due to the presence of interference nodes at such locations. In this case, by using the control means to change the emission state, it is possible to adjust the interference pattern to create interference antinodes at the locations of the receivers, and in this way reception becomes possible.

Of course, the interference antinodes do not have to be placed exactly at the position of the receivers to create an optimum reception environment, and so long as reception is possible, interference antinodes may be created in the vicinity of the receivers. In other words, so long as interference node portions are not created at the positions of the receivers, it should be possible for the receivers to receive the electromagnetic waves.

Furthermore, the interference pattern may be changed based on acquired position data of the receivers. In this regard, such position data may be stored in advance or transmitted from the receivers when needed. Further, the communication apparatus can acquire position data by carrying out a position detection method according to the present invention.

Accordingly, the communication apparatus according to the present invention is equipped with a storage means for storing the acquired position data, and the control means creates a prescribed interference pattern based on the position data stored in the storage means.

Further, the storage means may be a temporary memory. Namely, in the case where the communication apparatus carries out position detection, the detected positions can be stored in a temporary memory, and then the appropriate emission state can be created based on such stored positions. Of course, such detected positions may be stored in a permanent memory instead of a temporary memory.

Now, when the positions of the receivers are known, it is possible to determine the emission conditions that will create interference antinodes at the positions of the receivers. Accordingly, by adjusting the emission conditions with the control means, it is possible to reliably transmit data to the receivers. Of course, because an interference pattern is created based on position data, in addition to the method of creating interference antinodes at prescribed positions, an optimum reception environment can be established by creating interference nodes at prescribed positions, and when both of these methods are carried out, it becomes possible to reliably transmit data to specific receivers.

Namely, the interference pattern can be changed to create interference wave antinodes at the positions of receivers wanting to receive the data transmitted from the communication apparatus, and interference wave nodes at the positions of receivers not wanting to receive the data transmitted from the communication apparatus.

Accordingly, in the communication apparatus of the present invention, the control means changes the interference pattern to create interference wave antinodes at the positions of receivers wanting to receive the data transmitted from the communication apparatus, and interference wave nodes at the positions of receivers not wanting to receive the data transmitted from the communication apparatus.

In this way, in the case where a plurality of receivers are located within the maximum electromagnetic wave reach area in space, it is possible to transmit data only to specific receivers, and this makes it possible to improve security.

Furthermore, the communication method of the present invention may include a switching method for switching the transmission mode from a multiple antenna transmission mode to a single antenna transmission mode in which only one antenna emits electromagnetic waves.

According, by providing the communication apparatus of the present invention with a switching means (corresponding to the "control circuit 17" and the "antenna selector switch 24" in the preferred embodiments) for selecting either the plurality of antennas or a single antenna for emission, it becomes possible to switch the transmission mode of the communication apparatus between a multiple antenna transmission mode in which data is transmitted using the interference waves created by the electromagnetic waves emitted from the plurality of antennas, and a single antenna transmission mode in which data is transmitted using the electromagnetic waves emitted from only one antenna.

With this structure, it becomes possible for the communication apparatus of the present invention to carry out a normal transmission method (single antenna transmission method) using only one antenna to transmit data to receivers located within a prescribed region. When this is done, because no interference pattern is generated, there will be no creation of regions incapable of reception (due to interference nodes) within the transmission area. Further, in the case where data is to be transmitted to receivers located at distances too far away for signals to reach using the single transmission mode, the communication apparatus switches to the multiple antenna transmission mode to transmit data using interference waves. In this way, the present invention makes it possible to transmit data within a wide area.

Further, in order to detect the position of the receivers, the position detection method according to the present invention includes the steps of emitting electromagnetic waves from a plurality of transmission antennas provided in a communication apparatus; utilizing the interference waves created by the interference between the electromagnetic waves emitted from the plurality of antennas to transmit data; adjusting the emission state of the communication apparatus when electromagnetic waves are being emitted from the plurality of antennas in order to change the interference pattern; transmitting reception data (corresponding to the "electric field strength E and the rate of change of E (derivatives of E)" in the preferred embodiments) from the receiver to the communication apparatus, wherein the reception data is related to the reception state at the time the interference waves were received by the receiver while the interference pattern was being changed; and detecting the position of the receiver based on the reception data received by the communication apparatus and on data related to the emission state of the communication apparatus.

Accordingly, the communication apparatus of the present invention can be provided with position detection means for detecting the position of receivers based on reception data transmitted to the communication apparatus from the receivers and on data related to the emission state of the communication apparatus, wherein the reception data transmitted from the receivers includes data on the reception state of the receivers at the time the interference waves were received by the receivers while the interference pattern was being changed.

In this way, when electromagnetic waves are emitted under certain conditions, the electric field strength can be precisely determined from the drift distance from the transmitter. However, there are cases where the same electric field strength appears at a plurality of drift distances. Accordingly, by changing the emission conditions to change the interference pattern, the change in the reception state at such time can be used to select the correct drift distance between the transmitter and receiver, and this makes it possible to detect the position of the receiver.

This summary of the invention dose not necessarily describe all necessary features so that the invention may also be a sub-combination of these described features.

## BRIEF DESCRIPTION OF THE DRAWINGS

Fig. 1 is a rough schematic view of a communication apparatus according to a first embodiment of the present invention.

Fig. 2 is diagram showing an example interference pattern used for explaining the operation principle of the present invention.

Fig. 3 is a diagram used for explaining the operation of the present invention.

Fig. 4 is a diagram used for explaining the operation of the present invention.

Fig. 5 is a graph showing the correlation between the transmission distance and the electric field strength.

Fig. 6 is a diagram showing a particular structure of a communication apparatus according to the first embodiment of the present invention.

Fig. 7 is a schematic view of the transmission portion of the circuit shown in Fig. 6.

Fig. 8 is a schematic view of a communication apparatus according to a second embodiment of the present invention.

Fig. 9 is a diagram used for explaining the operation of the present invention.

Fig. 10 is a flow chart showing the operations carried out by a receiver.

Fig. 11 is a graph showing the correlation of the reception state at the receiver side with respect to the phase of the transmitter.

Fig. 12 is a flow chart showing the operations carried out by the transmitter.

Fig. 13 is a schematic view of a communication apparatus according to a third embodiment of the present invention.

Fig. 14 is a diagram used for explaining the operation principle of the present invention.

Fig. 15 is a diagram used for explaining the operation principle of the present invention.

Figs. 16 through 18 show a flow chart of the operations carried out by the position detection portion.

Fig. 19 is a diagram used for describing the operation of a fourth embodiment of the present invention.

Fig. 20 is a diagram used for explaining the operation principle of the fourth embodiment.

Fig. 21 is a diagram used for describing the operation of a fifth embodiment of the present invention.

Figs. 22 and 23 show a flow chart of the main operations carried out by the fifth embodiment.

## DETAILED DESCRIPTION OF THE PREFERRED EMBODIMENTS

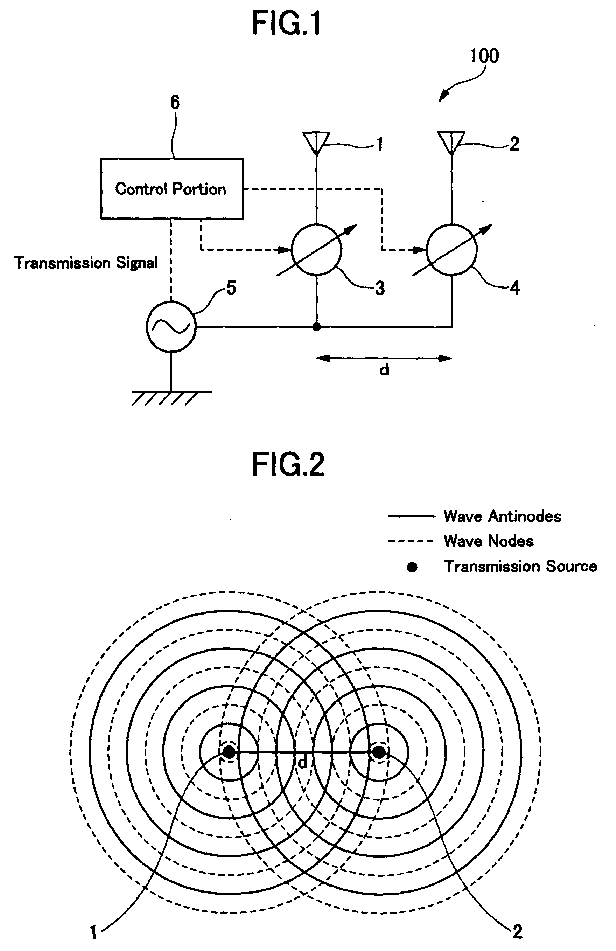

Fig 1 is a schematic drawing of a first embodiment of the present invention. In this present embodiment, a communication apparatus (transmitter) 100 includes two dipole antennas (i.e., first and second antennas) 1,2 having the same characteristics, and the antennas 1, 2 are connected to an oscillator 5 via first and second phase converters 3, 4 respectively. In this example, the oscillator 5 outputs transmission signals to both the first and second phase converters 3, 4, with such transmission signals then being sent to the antennas 1, 2 with a phase shift $\psi$.

The first and second antennas 1, 2 are arranged a distance "d" from each other. Further, power is evenly distributed to the first and second antennas 1, 2 by means of a distributor (not shown in the drawings).

With this arrangement, the electromagnetic waves transmitted from the communication apparatus 100 propagate as shown in Fig. 2. In other words, because electromagnetic waves behave like all waves, wave nodes (indicated by dashed lines) and wave antinodes (indicated by solid lines) in the shape of concentric circles alternately spread out from the antennas 1,2 which form the transmission source (i.e., electromagnetic waves are propagated into the surroundings). Further, because the signals emitted from the first and second antennas 1,2 have the same unmodulated sinusoidal waveform, the alternating wave nodes (indicated by dashed lines) and wave antinodes (indicated by solid lines) appear with uniform spacing as shown in Fig. 2, and as a result the electromagnetic waves from the antennas 1, 2 interfere with each other.

The phenomenon described above is shown by the equations given below. First, the oscillator 5 generates an unmodulated sinusoidal wave signal, and this transmission signal is represented by the following equation.

$$V = V_0 \sin(\omega t + \psi) \qquad (1)$$

Now, if the first phase converter 3 generates a phase shift $\psi_1$, and the second phase converter 4 generates a phase shift $\psi_2$, then the signals $V_1$, $V_2$ respectively sent to the first and second antennas 1, 2 are given by the following equations:

$$V_1 = V_0 \sin(\omega t + \phi_1 + \psi_1) \qquad (2)$$

$$V_2 = V_0 \sin(\omega t + \phi_2 + \psi_2)$$

Further, if the first and second antennas 1, 2 are dipole antennas having a length 21, then the electric fields $E_{\theta n}$ emitted from the antennas 1, 2 are given by the following equation:

$$E_{\theta n} = j60I_n \frac{e^{-jkr_n}}{r_n} \cdot A \cdot e^{-j(\omega t + \phi_n + \psi_n)} \quad (3)$$

$$K_n = \frac{2\pi}{\lambda_n}$$

where

$$A = \frac{\cos(k_n l_n \cos\theta_n) - \cos k_n l_n}{\sin\theta_n}$$

(where n = 1 or 2, with the subscript 1 indicating the first antenna 1, and the subscript 2 indicating the second antenna 2. Note: This notation is the same for the equations given below)

In the case of a half-wave dipole ($l_n = \lambda/2$), when considering just the maximum emission direction (Note: a vertically arranged dipole has the same gain within the horizontal plane, namely, $\theta_n = \pi/2$), the directional coefficient is given by the following equation:

$$(\cos(k_n l_n \cos\theta_n) - \cos k_n l_n) / \sin\theta_n = 1 \quad \cdots \quad (4)$$

Further, the electric field strength of each antenna is given by the following equation:

$$E_{\theta n} = (t, r_n, \psi_n) = j60I_n \frac{e^{-jkr_n}}{r_n} \cdot e^{-j(\omega t_n + \phi_n + \psi_n)} \quad (5)$$

Here, $r_n$ is the distance from antenna n.

The electric field strength of the electromagnetic waves outputted from the communication apparatus 100 is the composite vector $E_{TOTAL}$ of the electric field strengths of the electromagnetic waves emitted from the first and second antennas 1, 2 and is given by the following equation:

$$E_{TOTAL}(r_1, r_2, t, \psi_1, \psi_2) = \left| E_{\theta 1} \right| + \left| E_{\theta 2} \right|$$

$$= \left| B + C \right| \qquad \cdots (6)$$

$$\text{但し、} \quad B = j60I_1 \frac{e^{-jkr_1}}{r_1} \cdot e^{-j(\omega_1 t + \phi_1 + \psi_1)}$$

$$C = j60I_2 \frac{e^{-jkr_2}}{r_2} \cdot e^{-j(\omega_2 t + \phi_2 + \psi_2)}$$

As is clear from Equation (6), the composite wave forms a function of $\psi_1$ and $\psi_2$ when the initial values I, $\omega$, $\phi$, $r_1$ and $r_2$ are provided. Accordingly, by controlling the phase shift $\psi$, it is possible to control the electric field strength at any specified point in space.

On the other hand, because the first and second antennas 1, 2 have the same characteristics, and because electrical power is evenly distributed to the antennas 1, 2, the following relationship is obtained:

$$I_1 = I_2 = I \qquad\qquad (7)$$

Further, because the first and second antennas 1, 2 receive the same output from the oscillator 5, and because such received signals have the same phase and the same frequency, the follow relationships (8a) ~ (8c) are obtained:

$$\omega_1 = \omega_2 = \omega \qquad\qquad (8a)$$

$$\phi_1 = \phi_2 = \phi \qquad\qquad (8b)$$

$$\psi_1 = \psi_2 = \psi \qquad\qquad (8c)$$

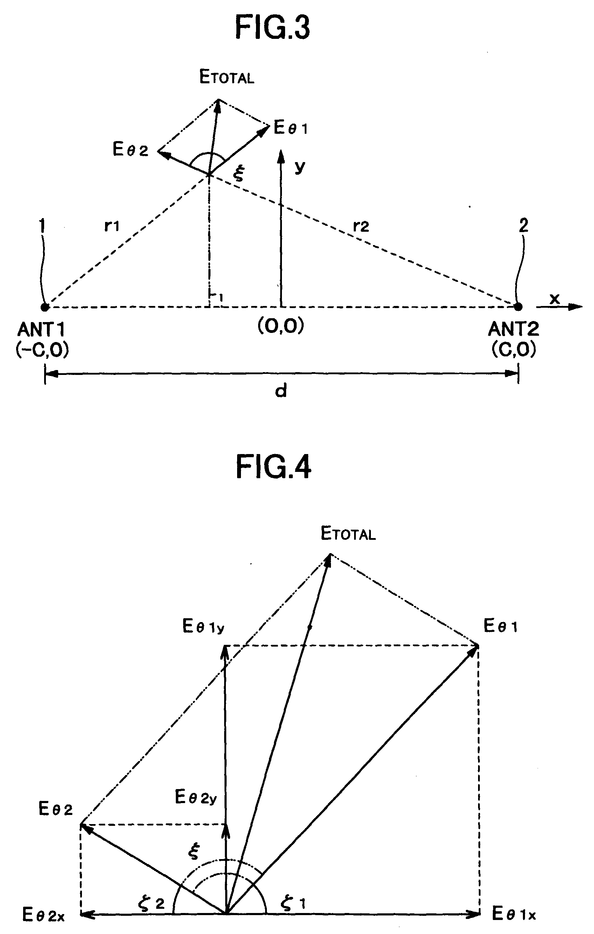

As a result, using the relationships (7) and (8a) ~ (8c) to carry out substitutions in equation (6), it becomes possible to calculate the electric field strength $E_{TOTAL}(r_1, r_2 t)$ of the electromagnetic waves emitted from the communication apparatus 100 at a position located a distance $r_1$ from the first antenna 1 and a distance $r_2$ from the second antenna 2 at time t using Equation (9) given below. An example of this is shown in Fig. 3.

$$E_{TOTAL}(r_1, r_2, t) = j60I \cdot \left| \frac{1}{r_1} \cdot e^{-j(\omega t + kr_1)} + \frac{1}{r_2} \cdot e^{-j(\omega t + kr_2)} \right| \qquad (9)$$

As shown in Fig. 3, within the maximum emission plane, a line segment which connects the first and second antennas 1,2 forms the x axis, and a second line segment perpendicular thereto forms the y axis. Now, if the position coordinates of the first antenna 1 are (-C, 0) and the position coordinates of the second antenna 2 are (C, 0), then the equations given below can be obtained for the situation shown in Fig. 3. In this regard, because the electromagnetic waves propagate within the horizontal plane, the electric field component in the z axis direction is zero.

$$E_{\theta 1} = E_{\theta 1_x} i + E_{\theta 1y} j$$

$$= E_{\theta 1} \cos \zeta_1 \cdot i + E_{\theta 1} \sin \zeta_2 \cdot j$$

$$E_{\theta 2} = E_{\theta 2_x} i + E_{\theta 2y} j$$

$$= E_{\theta 2} \cos \zeta_2 \cdot i + E_{\theta 2} \sin \zeta_2 \cdot j \qquad \cdots (10)$$

where

$$\zeta_1 = \tan^{-1} y/(x+C)$$

$$\zeta_2 = \tan^{-1} y/(x-C)$$

(x, y) are the coordinates in the xy plane

Further, from Figs. 3 and 4, the composite angle of the composite vector of the signals from the first and second antennas 1, 2 are given by the following equation:

$$\zeta = \pi - (\zeta_1 + \zeta_2) \qquad (11)$$

Accordingly, the composite vector $E_{TOTAL}$ is given by the following equation:

$$E_{total} = j 60 I \cdot (D \cdot i + F \cdot j) \qquad \cdots (12)$$

where
$$D = \left| \frac{1}{r_1} \cdot e^{-j(\omega t + kr_1)} \right| \cos \zeta_1 + \left| \frac{1}{r_2} \cdot e^{-j(\omega t + kr_2)} \right| \cos \zeta_2$$

$$F = \left| \frac{1}{r_1} \cdot e^{-j(\omega t + kr_1)} \right| \sin \zeta_1 + \left| \frac{1}{r_2} \cdot e^{-j(\omega t + kr_2)} \right| \sin \zeta_2$$

From this, the magnitude (absolute value) can be calculated using the following equation:

$$|E_{total}| = \frac{60I}{r_1 r_2} \sqrt{r_2^2 \cdot e^{-j2(\omega t + kr_1)} + r_1^2 \cdot e^{-j2(\omega t + kr_2)} - G}$$

where

$$G = 4\,r_1 r_2 \cdot e^{-j\{2\omega t + k(r_1 + r_2)\}} \cdot \cos\xi$$

Accordingly, Equation (13) above can be used to calculate the electric field strength at any point from the first and second antennas 1, 2. Further, it is possible to strengthen or weaken the electric field strength by the interference of the signals from the first and second antennas 1, 2, and as is clear from a comparison of Equations (6) and (13), strong and weak points can be controlled by the phase angle.

In other words, by controlling the phase of the carrier, because the electromagnetic waves emitted from the two antennas 1, 2 have the same phase, they will mutually interfere with each other, with antinodes being created when the path difference is $2n\lambda$ and nodes being created when the path difference is $(2n + 1)\lambda$. Further, by scanning the phase $\psi$ of the first antenna 1 or the second antenna 2, it is possible to control the positions of the antinodes and nodes.

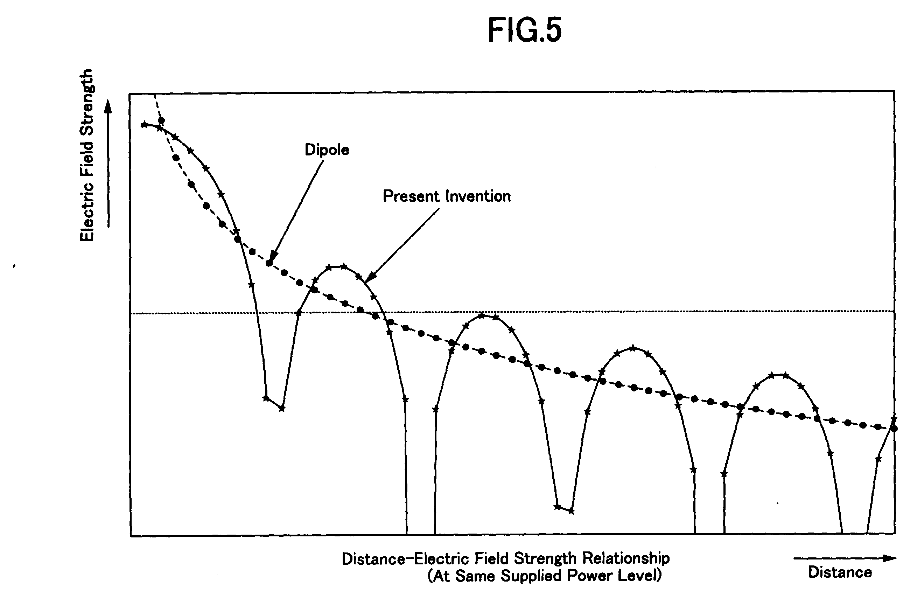

In this way, by using interference generated by two antennas, the present invention makes it possible to generate a high electric field strength at distances farther than can be achieved with the prior art single antenna arrangement. In this connection, Fig. 5 shows the relationship between the electric field strength and the drift distance from the communication apparatus 100. In other words, in the case of the prior art single dipole antenna arrangement, the electric field strength gradually decreases with increasing distance. In contrast with this, in the case of the present invention where interference from two antennas is used, because antinodes and nodes alternately appear, the electric field strength repeatedly increases and decreases as the overall level decreases with increasing distance.

Accordingly, as shown in Fig. 5, at certain points the electric field strength generated by the two antenna arrangement of the present invention is greater than that generated by the prior art one antenna. Consequently, the transmission distance for the electromagnetic waves is increased, and this makes it possible to enlarge the transmission area.

Further, because there is no overall increase in the electric field strength, depending on position (drift distance), there are also regions which have a lower electric field strength than that generated by the prior art single dipole antenna arrangement. In other words, an electric field strength pattern having strong and weak regions is generated in space in accordance with the electromagnetic wave interference pattern. Accordingly, while making it possible to transmit electromagnetic waves over distances greater than that achieved with the prior art arrangement, the present invention makes it possible to create regions where the electromagnetic waves do not reach within the maximum electromagnetic wave reach area. Consequently, if the reception antenna of a receiver is positioned within an antinode region, it will be possible to adequately receive the signals transmitted from the communication apparatus of the present embodiment, but if the reception antenna of the receiver is positioned within a node region, it will not be possible to receive the signals transmitted from the communication apparatus of the present embodiment.

Furthermore, because the electric field strength pattern in space is determined by the interference pattern of the two electromagnetic waves emitted from the two antennas 1, 2, it is possible to change the electric field strength pattern by controlling the transmission state (transmission conditions) of the electromagnetic waves emitted from the antennas 1, 2, such as the phase, frequency and intensity. For example, a control portion 6 for controlling such transmission state may be provided to send control signals to the oscillator 5 to change the frequency and intensity (amplitude), and control signals to the phase converters 3, 4 to generate phase shifts.

Now, because the electric field at any point from the first and second antennas 1, 2 can be calculated by Equation (13) above, it is possible to use an arithmetic process to determine the antinode positions and node positions of the transmission signals emitted from the antennas 1, 2 based on control signals from the control portion 6. Accordingly, by storing the positions of the receivers located within the maximum transmission area, and by sending appropriate control signals from the control portion 6 to create an interference pattern in which electric field strength antinode regions are created at the positions of receivers meant to receive transmission signals (data) and electric field strength node regions are created at the positions of receivers not meant to receive transmission signals, it becomes possible to selectively transmit electromagnetic signals to any desired receiver.

At this point, it should be noted that even though the present embodiment is described as using two antennas, three or more antennas may be used in the present invention. Namely, "n" number of antennas may be provided at any desired locations in space. In this case, the electric field strength $E_{\theta k}$ at any 3-D position $P(x, y, z)$ from the k'th antenna can be calculated by Equation (14) below which is obtained from Equation (3)

EP 1 077 536 A2

$$E_{\theta k} = j60I_k \frac{e^{-jkr_k}}{r_k} \cdot \frac{H}{\sin\theta_k} \cdot e^{-j(\omega t+\phi_k+\psi_k)} \quad \cdots \quad (14)$$

$$(k = 1, 2, \cdots, n)$$

$$\text{但し、} H = \cos(k_k l_k \cos\theta_k) - \cos k_k l_k$$

Now, if the coordinates of the k'th antenna are $(x_k, Y_k, z_k)$, then the vector from this k'th antenna to any position $P(x, y, z)$ is given by the following equation:

$$\overrightarrow{A_K P} = \begin{pmatrix} x - x_K \\ y - y_K \\ z - z_K \end{pmatrix} \quad \cdots \quad (15)$$

Further, the distance $r_k$ from the k'th antenna to the point P and the angles $\delta_k$ and $\theta_k$ formed respectively in the horizontal and verticals planes are as follows:

$$r_k = \sqrt{(x-x_K)^2 + (y-y_K)^2 + (z-z_K)^2} \tag{16}$$

$$\delta_K = \tan^{-1}\left[\frac{y-y_K}{x-x_K}\right]$$

$$\theta_k = \tan^{-1}\left[\frac{z-z_K}{\sqrt{(x-x_K)^2 + (y-y_K)^2}}\right]$$

Further, because the direction vector of $E_{\theta k}$ is given by Equation (15), using Equation (16) the axial components thereof are as follows:

$$E_{\theta k} = \begin{pmatrix} E_{\theta k}\cos\theta_k\cos\delta_k \\ E_{\theta k}\cos\theta_k\sin\delta_k \\ E_{\theta k}\sin\theta_k \end{pmatrix} \quad \cdots \quad (17)$$

Accordingly, because the composite electric field strength $E_{TOTAL}$ at any point P is the sum of each electric field vector, $E_{TOTAL}$ is given by the following:

10

$$E_{total} = \sum_{k=1}^{n} E_{\theta k} = \begin{pmatrix} \displaystyle\sum_{k=1}^{n} E_{\theta k} \cos\theta_k \cos\delta_k \\ \displaystyle\sum_{k=1}^{n} E_{\theta k} \cos\theta_k \sin\delta_k \\ \displaystyle\sum_{k=1}^{n} E_{\theta k} \sin\theta_k \end{pmatrix} \quad \cdots (18)$$

Further, the magnitude of the electric field strength can be calculated from the following equation:

$$|E_{total}| = \sqrt{L+M+N} \tag{19}$$

where

$$L = \left( \sum_{k=1}^{n} E_{\theta k} \cos\theta_k \cos\delta k \right)^2$$

$$M = \left( \sum_{k=1}^{n} E_{\theta k} \cos\theta_k \sin\delta k \right)^2$$

$$N = \left( \sum_{k=1}^{n} E_{\theta k} \sin\delta_k \right)^2$$

As is clear from Equations (18) and (19) given above, even in the case where "n" number of antennas are used, it is possible to calculate the electric field strength, and by calculating partial derivatives of Equation (19) with the appropriate parameters, it is also possible to determine the maximum and minimum values. Accordingly, the interference pattern in the case of three or more antennas can be controlled in the same manner as is carried out in the case of two antennas described above.

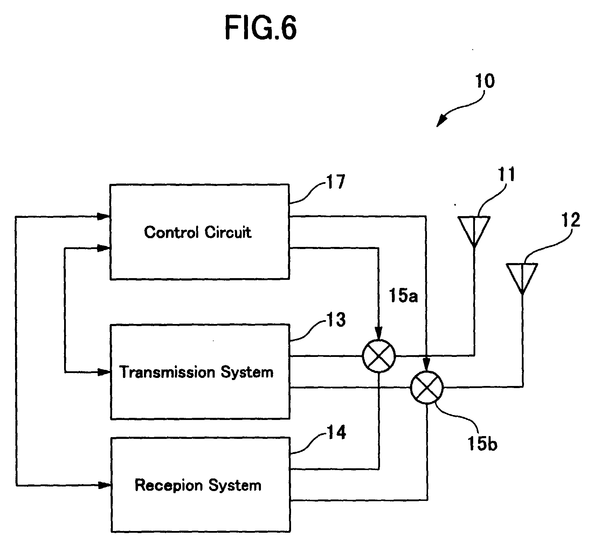

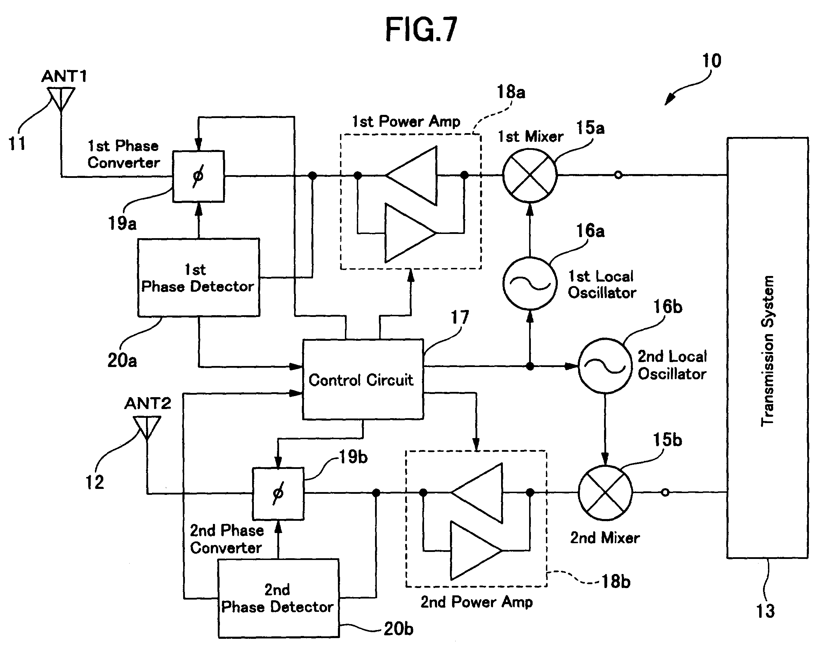

In this connection, Figs. 6 and 7 show a detailed structure of a communication apparatus 10 equipped with a transceiver function according to the present embodiment. Namely, as shown in Fig. 6, in order to make it possible for the communication apparatus 100 to transmit and receive signals, a transmission system 13 and a reception system 14 are connected to first and second antennas 11, 12 via first and second mixers 15a, 15b. Namely, the same transmission signal outputted from the transmission system 13 is sent to both mixers 15a, 15b to be mixed with the carrier frequencies thereof, and then after frequency conversion has been carried out, the signals from the mixers 15a, 15b are respectively transmitted by the first and second antennas 11, 12. Further, signals received by the antennas 11, 12 are respectively sent through the mixers 15a, 15b to the reception system 14.

Further, the communication apparatus 10 is provided with a control circuit 17 which sends control signals to the transmission system 13, the reception system 14, and the first and second mixers 15a, 15b. This arrangement forms a means for changing the transmission state (emission state) of the electromagnetic waves emitted from the antennas 11, 12 in accordance with the principle of the present invention described above.

In this connection, Fig. 7 is detailed block diagram of the transmission mechanism portion of the communication apparatus 100 shown in Fig. 6. As shown in Fig. 7, the transmission signals sent from the transmission system 13 are supplied to the first and second mixers 15a, 15b to undergo mixing with signals outputted from first and second local oscillators 16a, 16b, whereby modulation is carried out. At this time, because the first and second local oscillators 16a, 16b are oscillating at the same frequency, the same transmission data is modulated in the same manner.

Further, first and second power amplifiers 18a, 18b are connected respectively to the output side of the first and second mixers 15a, 15b to amplify the modulated transmission signals, and these amplified signals are passed through first and second phase converters 19a, 19b and then transmitted by the antennas 11, 12. At this time, the phase of the transmission signals (after amplification) is detected by first and second phase detectors 20a, 20b, and based on such detection results, the first and second phase converters 19a, 19b are controlled to make the phases of each branch match each other.

Now, in a structure such as this, by using control signals from the control circuit 17 to change the oscillation frequency of the first and second local oscillators 16a, 16b, to change the amplification factor of the first and second power amplifiers 18a, 18b, and to change the phase shifts created by the first and second phase converters 19a, 19b, it is possible to change the emission state of the electromagnetic waves emitted from the first and second antennas 11, 12, and this makes it possible to change the interference pattern (electric field strength pattern) of the electromagnetic waves emitted from the first and second antennas 11, 12. Of course, the control circuit 17 does not have to carry out all three of the changes described above (although this will achieve good results), and it is possible to arrange for the control circuit 17 to carry out only one or two of such changes.

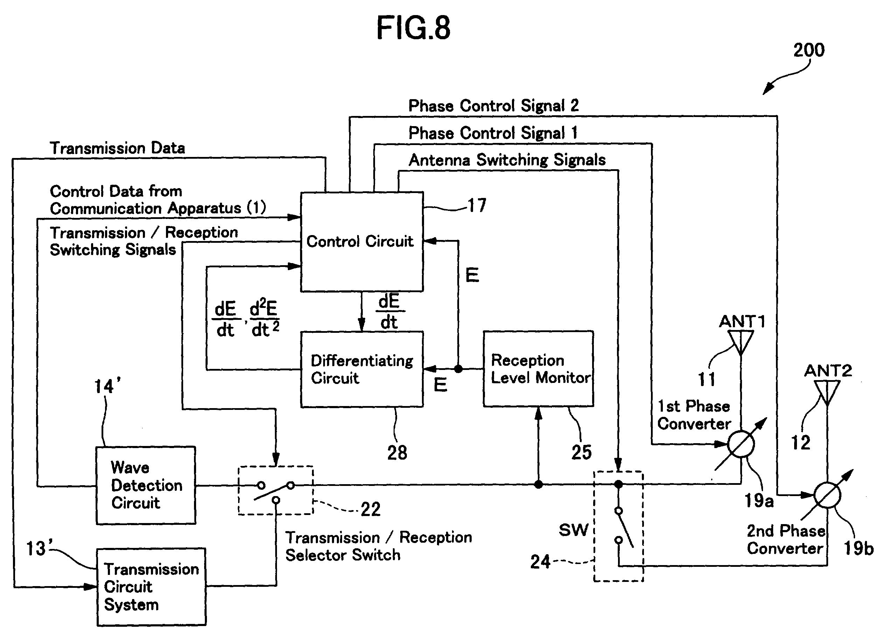

Next, Fig. 8 is a block diagram of a communication apparatus 200 according to a second embodiment of the present invention. In this embodiment, an antenna selector switch 24 is connected to the two antennas 11, 12 to enable switching between a normal transmission mode in which only one of the antennas 11, 12 is used, and a diversity mode (long distance-communication mode) in which both the antennas 11, 12 are used to create an interference pattern.

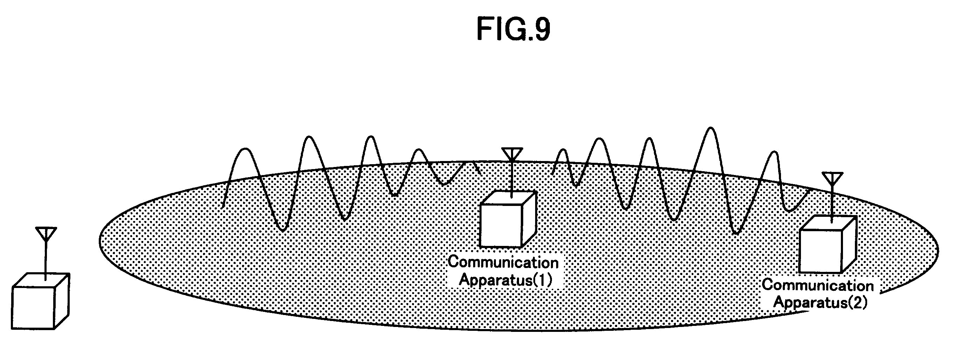

In this way, in the example situation shown in Fig. 9, when data is communicated between a communication apparatus (1) and a communication apparatus (2) both equipped with transmission and reception (half duplex) functions (i.e., when data is transmitted from the communication apparatus (1) to the communication apparatus (2) ), the communication apparatus (1) normally carries out transmission using only one antenna (e.g., antenna 11). Then, when the reception conditions in the region of the communication apparatus (2) (i.e., the receiver) deteriorate, such as in the case where the reception level decreases due to the increasing distance (transmission distance) between the communication apparatus (1) and the communication apparatus (2) when at least one of the communication apparatuses (1), (2) is moving, by switching to the diversity mode for carrying out transmission, it is possible to reliably transmit transmission signals from the communication apparatus (1) to the communication apparatus (2).

Further, because the judgement of whether or not the reception level has deteriorated can not be carried out at the transmission side, a search of the reception level is carried out at the receiver (communication apparatus (2) ) side, and in the case where the detected level is below a prescribed level, a transmission mode switching request is sent to the transmitter (communication apparatus (1) ) side.

Then, because transmission with two antennas creates an electric field pattern having strong and weak regions, an interference wave antinode region is preferably generated at the position of the receiver in order to create a maximum electric field at such reception position. In this regard, in order to create such a maximum electric field, appropriate adjustments can be carried out on the emission state (e.g., the phase) by means of a control circuit in the same manner as described above in the first embodiment.

Now, as for the specific adjustments carried out, in the case where the position of the receiver is known in advance, an interference pattern based on such position data is generated to create an electric field maximum at the reception position.

Further, in the case where the position of the receiver is unclear, the emission state can be changed (i.e., a sweep can be carried out) while transmitting transmission data, and the reception level can be searched at the receiver (communication apparatus (2)) side to detect the optimum conditions, and by sending such detection signals to the transmitter (communication apparatus (1)), it is possible to determine the emission conditions for generating an optimum emission state.

In this regard, the block diagram of Fig. 8 shows the internal structure of the communication apparatus 200 equipped with both transmission and reception functions for carrying out the above process (i.e., the search and detection process carried out during the sweep of the emission conditions).

As shown in Fig. 8, a transmission circuit system 13' and a wave detection circuit 14' which forms a reception system are connected to a transmission/reception selector switch 22 to make it possible to select either the transmission circuit system 13' or the wave detection circuit 14' for connection with a prescribed arrangement of the antennas 11, 12 via the antenna selector switch 24 (and via the phase converters 19a, 19b).

Now, based on switching signals from the control circuit 17, the transmission/reception selector switch 22 alternately switches between the transmission circuit system 13' and the wave detection circuit 14' in accordance with a prescribed timing, whereby the communication apparatus 200 alternately switches between a transmission mode and a reception mode at prescribed time intervals. Further, based on switching signals from the control circuit 17, the antenna selector switch 24 is operated to allow only one antenna (e.g., the first antenna 11) to be used during the initial state of transmission as described above, and is operated to allow use of both antennas 11, 12 under prescribed conditions. On the other hand, in the case of reception, one antenna (e.g., the first antenna 11) is used effectively to pick up electromagnetic waves which are then sent to the wave detection circuit 14', where the reception data is analyzed and prescribed processes are carried out.

Furthermore, a reception level monitor 25 is connected to the reception route from the antenna to detect the signal level E of the received signal. Then, the detection output of the reception level monitor 25 is sent to the control circuit 17, where a judgement of whether or not the reception level E is greater than or equal to a threshold value is carried out.

Further, the output of the reception level monitor 25 is also sent to a differentiating circuit 28 which calculates the derivative of the reception level E and sends the results to the control circuit 17. Then, the first derivative (dE/dt) is returned to the differentiating circuit 28 to undergo differentiation again. In this way, both the first derivative (dE/dt) and the second derivative ($d^2E/dt^2$) are supplied to control circuit 17 from the differentiating circuit 28.

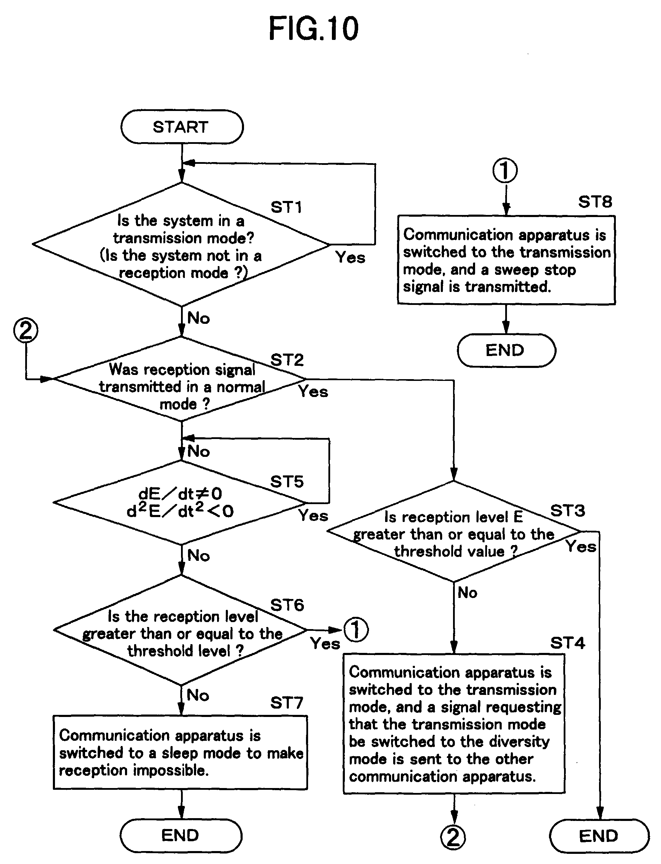

Then, the control circuit 17 carries out a prescribed reception control based on the data supplied from the reception level monitor 25 and the differentiating circuit 28. Namely, the control operations shown in the flow chart of Fig. 10 are carried out.

First, because the communication apparatus switches alternately between the transmission mode and the reception mode, when the transmission mode is being used, the control operations are in standby (ST1), and when the reception mode is being used, the operations proceed to Step 2, and a judgement of whether or not the current reception data was transmitted in a normal mode is carried out. This judgement of whether or not a normal mode was used can be easily carried out, for example, based on data indicating the transmission mode added to the transmission data.

In the case of a normal mode, the operations proceed to Step 3, and a judgement of whether or not the reception level E supplied from the reception level monitor 25 is greater than or equal to the threshold level is carried out. Then, in the case where the threshold level is reached or exceeded (in the case where a sufficient reception level was obtained by one antenna), because the current state has no problem with reception, such state is maintained.

On the other hand, in the case where the reception level E does not satisfy the threshold level (within the electric field region just before the reception level falls to level that can not be received), a NO judgement is made at Step 3 and the communication apparatus switches to a transmission mode, and then a signal requesting that the transmission mode be switched to the diversity mode is sent to the other communication apparatus (ST 4). Then, the operations return to Step 2.

At this point in time, because the communication apparatus at the transmission side lies within the prior art communication area, the switching signal from the communication apparatus at the reception side can be received by the communication apparatus at the transmission side. Then, after receiving this switching signal, the communication apparatus at the transmission side discontinues transmission using the prior art one antenna arrangement, and begins transmission using both antennas to create transmission diversity. Furthermore, because electromagnetic signals emitted by transmission diversity include peak points (antinodes) and null points (nodes), the phases can be changed to carry out a sweep of the peak points.

On the other hand, in the case where the judgement at Step 2 determines that the current reception data was not transmitted in a normal mode, namely, in the case where the current reception data was transmitted in the diversity mode, the process proceeds to Step 5, and the reception level monitor 25 monitors the absolute value of the reception level E from the output of the reception level monitor 25 and the first and second derivative equations of the electric field with respect to time $E(1) = dE/dt$ and $E(2) = d^2E/dt^2$ from the output of the differentiating circuit 28.

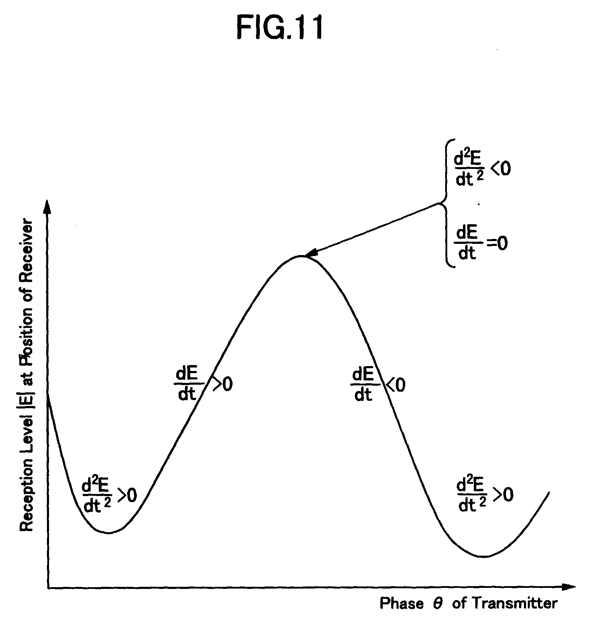

In this connection, the relationship of the absolute value of the reception level E of the receiver with respect to the change of the phase θ of the transmitter is shown in Fig. 11. Accordingly, when the first time derivative of the reception level E is zero (no change), a maximum value occurs in the case where the second derivative is negative (at the point where the change goes from increasing values to decreasing values). In other words, because the phase is swept at the transmitter side, the reception level at the reception side varies over time. Accordingly, the operation process waits at Step 5 until the reception level reaches the maximum value, and in the case where the conditions are satisfied (i.e., in the case where a NO judgement result is obtained), the process proceeds to Step 6, and then a judgement of whether or not the reception level at such time is greater than or equal to a threshold level is carried out. In actuality, instead of measuring the electric field strength E directly, the communication apparatus measures the induced voltage V in the antenna element which is equivalent to the electric field strength.

Now, in the case where the threshold level is reached or exceeded, because it is judged that normal reception is possible for the emission state used when such received data was transmitted, the process proceeds to Step 8, and then after switching to the transmission mode, a sweep stop signal is transmitted. Then, if the transmitter which receives this sweep stop signal carries out a delay time conversion required for such communication and fixes the phase, it is possible to ensure a sufficient reception level.

On the other hand, in the case where a NO judgement is made at Step 6, because it is not possible to receive signals having a sufficient reception level even in the case of maximum reception sensitivity in the diversity mode, the communication apparatus switches to a sleep mode (ST 7) in which no reception is possible.

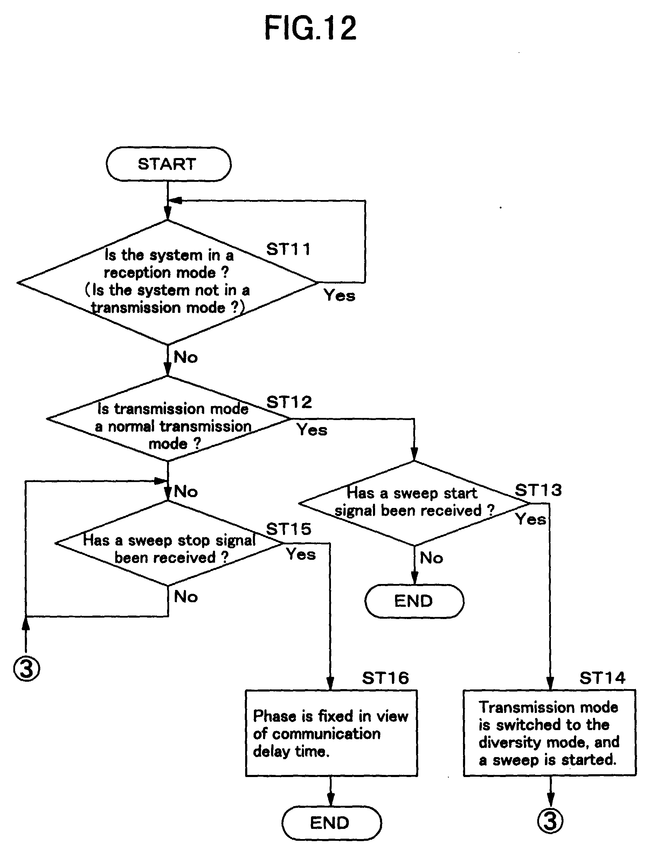

Further, the control flow carried out at the transmission side is shown by the flow chart in Fig. 12. First, a judgement of whether the current mode is a reception mode or transmission mode is carried out (ST 11), and in the case where the current mode is judged to be a transmission mode, transmission data is transmitted in accordance with a prescribed timing. Then, a judgement of whether or not the current transmission mode is a normal transmission mode is carried out (ST 12), and in the case where the current transmission mode is judged to be a normal transmission mode, a judgement of whether or not a sweep start signal from the receiver side has been received is carried out (ST 13), and in the case where no sweep control start signal is received, the normal transmission mode is continued, and the transmission and reception of data is carried out.

On the other hand, when a YES judgement is made at Step 13, namely, in the case where a sweep start signal is received, the transmission mode is switched to the diversity mode, and then the transmission of data is started while the phase is being swept (ST 14). This sweep is then repeated until a sweep stop signal is received from the receiver side (ST 15).

Now, in the case where a sweep stop signal is received, in view of the delay time due to communication, the emission state (phase) at the time the sweep stop signal is transmitted from the receiver side is determined, and then transmission is carried out in the diversity mode under such emission state.

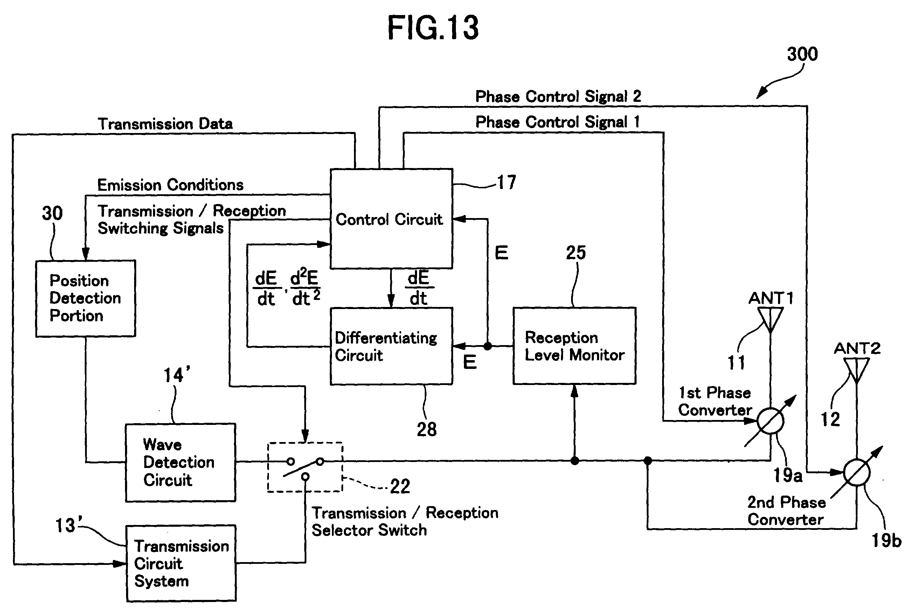

Next, Fig. 13 is a block diagram showing the essential portions of a communication apparatus 300 according to a third embodiment of the present invention. In this third embodiment, the communication apparatus 300 is equipped with a function for identifying the location of another communication apparatus (receiver) which is in communication with the communication apparatus 300. Further, most of the structure of the communication apparatus 300 is similar to the structure of the communication apparatus 200 of the second embodiment, but in the present embodiment, because transmission is normally carried out in the diversity mode using both the first and second antennas 11, 12, there is no provision of an antenna selector switch.

Namely, the communication apparatus 300 is provided with a position detection portion 30 for detecting the position of another communication apparatus which is in communication with the communication apparatus 300. This position detection portion 30 is connected to the output side of the wave detection circuit 14' to receive data transmitted from the other communication apparatus. Further, the position detection portion 30 is supplied with data related to the emission conditions from the control circuit 17. In this regard, the process earned out at each step of the transmission and reception of data is described below.

In the present embodiment, the communication apparatus 300 includes both transmission and reception (half duplex) functions, in which the operation mode is alternately switched between a transmission mode and a reception mode at prescribed time intervals. These operations will be described for the situation shown in Fig. 9, where it is assumed that the communication apparatus (1) detects the position of the other communication apparatus (2). Of course, this process can be reversed for the case where the communication apparatus (2) detects the position of the communication apparatus (1). Furthermore, it is of course possible to detect any other communication apparatuses.

Transmission From Communication Apparatus (1) (Detection Side)

First, signals are emitted simultaneously from the two antenna elements 11, 12 of the communication apparatus (1), and the interference pattern generated by the interfering waves in space are changed by controlling the emission conditions (parameters) such as the frequency, phase and output level of the transmission signals. This control of the emission conditions is carried out by control signals from the control circuit 17, and the specific process by which this is done is similar to that described above for the first embodiment.

Transmission & Reception by Communication Apparatus (2) (Side Being Detected)

If a phase sweep is carried out by the communication apparatus (1) when the communication apparatus (2) is located within the communication area of the communication apparatus (1), the changing electric field strength will be picked up as reception level $|E|$. The detection of this reception level $|E|$ is carried out by the reception level monitor 25. Further, when transmission signals from the communication apparatus (1) are received by the communication apparatus (2), after the reception level is detected, the differentiating circuit 28 calculates the first time derivative equation $E(1) = dE/dt$ and the second time derivative equation $E(2) = d^2E/dt^2$ of the reception level E of the electric field strength, and then the results are sent to the control circuit 17.

Then, the communication apparatus (2) transmits these results as reception data (E, E(1), E(2)) to the first communication apparatus (1). Namely, the reception data obtained by the control circuit 17 is sent to the transmission circuit system 13' as transmission data requiring transmission to the first communication apparatus (1). Then, the transmission data received by the transmission circuit system 13' is transmitted via the antennas 11, 12 to the first communication apparatus (1).

Reception by Communication Apparatus (1)

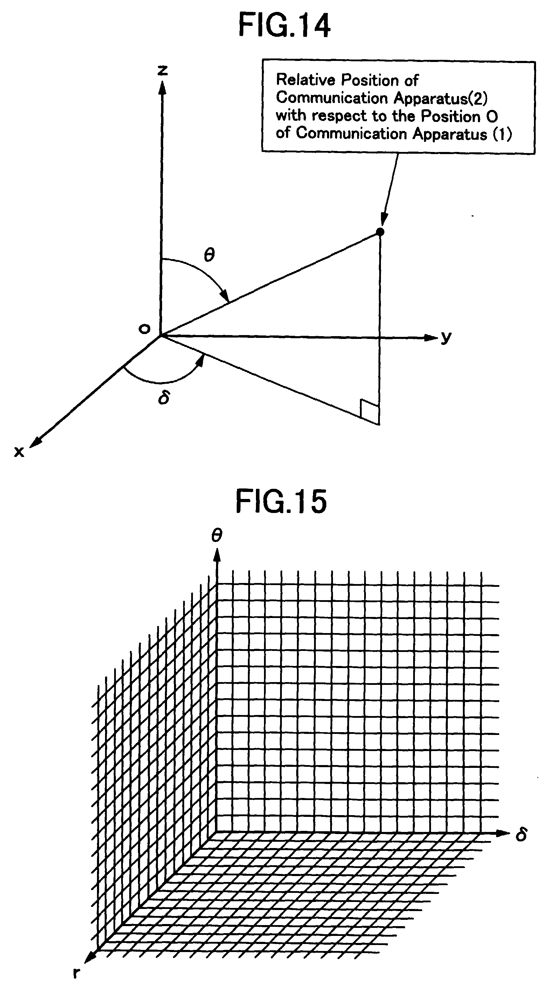

As was described above (see Equation (13)) for the first embodiment with reference to Fig. 5, when the emission state is fixed, there is a fixed correlation between the electric field strength and the drift distance from the emission source (communication apparatus (1)). However, a one-to-one correspondence does not apply to these two quantities, and in the case where a certain electric field strength value is detected, this value can occur at one or a plurality of distances between the communication apparatuses (1), (2). On the other hand, as shown in Fig. 11, even at the same electric field strength value, the first derivative equation E(1) and the second derivative equation E(2) are different. Also, when the emission state is changed, the graph characteristics shown in Figs. 5 and 11 will also change. Moreover, when the drift distance r is known, the communication apparatus (2) is known to be located on the surface of a sphere of radius r centered at the position of the communication apparatus (1). Furthermore, as shown in Fig. 14, if the communication apparatus (1) is located at the origin 0, the relative position of the communication apparatus (2) can be specified by the distance r, the horizontal angle δ and the vertical angle θ.

Accordingly, there is a fixed correlation between the polar coordinates (r, δ, θ), the emission conditions such as frequency f and phase ϕ, and the reception data such as E, E(1) and E(2), and a related relationship data base is stored in the communication apparatus (1). This data base has a three-dimensional structure in which a distance r, a horizontal angle δ and a vertical angle θ form parameters for each quantity E, E(1) and E(2) (see Fig. 15). In this regard, because the emission conditions are known by the communication apparatus (1), upon receiving the reception data E, E(1) and E(2) sent from the communication apparatus (2) in relation to the data transmitted under such emission conditions, the communication apparatus (1) searches the data base for such emission conditions to identify the position of the communication apparatus (2). Of course, because there are cases where the position can not be identified by only one emission state, data is collected while changing the emission conditions, and then an overall judgement is made to identify the position of the communication apparatus (2).

Specifically, based on the values of emission conditions such as frequency and phase set by the communication apparatus (1) at prescribed points in time, the data base thereof can be represented as follows. In this regard, because parameters such as the frequency ω and the phase ϕ are fixed, the quantities E, E(1) and E(2) can be given by a function f which is dependent only on t, r, δ, and θ.

$$E = f(r, \delta, \theta, t)$$

$$\frac{dE}{dt} = \frac{d}{dt} f(r, \delta, \theta, t)$$

$$\frac{d^2 E}{dt^2} = \frac{d^2}{dt^2} f(r, \delta, \theta, t)$$

$$\text{where} \quad \begin{cases} 0 \leq r \leq R \\ 0 \leq \delta \leq 2\pi \\ 0 \leq \theta \leq \pi \end{cases} \qquad \cdots (20)$$

Further, at the appropriate step, data is created within the range of the parameters described above (where R is the value set for the radius of the region being analyzed). Then, if n represents the step in each of the parameters, the m'th values are as follows (where m and n are independent variables for each parameter):

$$r_m = m(R/n)$$

$$\delta_m = m(\delta/n)$$

$$\theta_m = m(\theta/n)$$

where

$$m = 1, 2,...$$

$$n = 1, 2,...$$

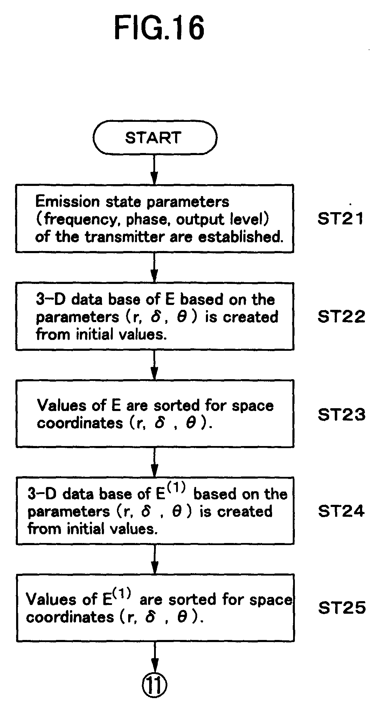

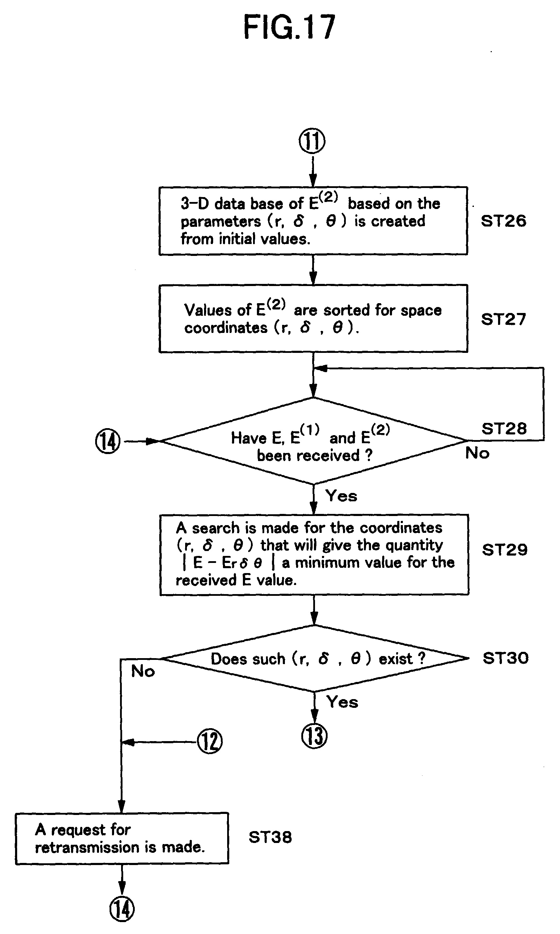

The values calculated above are stored as three-dimensional sets $(r, \delta, \theta)$ related to each of the quantities E, E(1) and E(2). At this time, because the subsequent process is carried out with good efficiency, the 3-D space points $(r, \delta, \theta)$ are sorted for each value of E, E(1) and E(2) (ST 21 ~ ST 27 in Figs. 16 and 17).

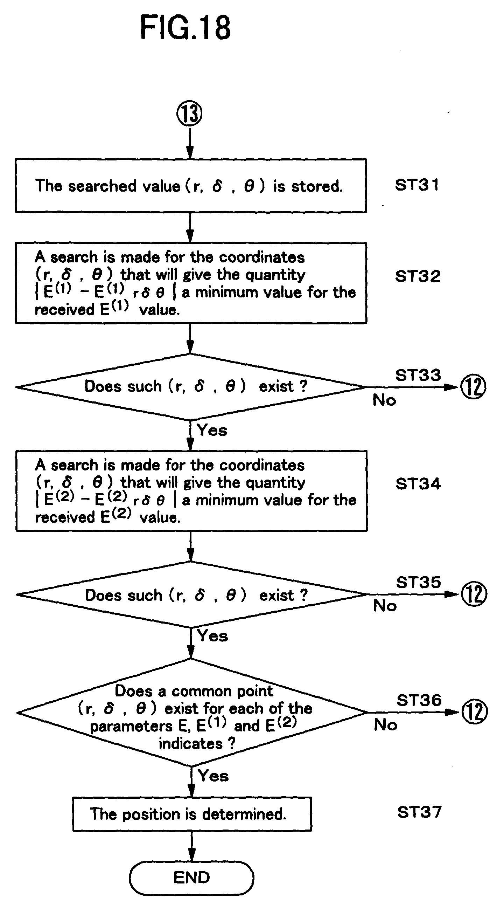

Next, when the communication apparatus (1) receives E, E(1) and E(2) data from the communication apparatus (2) (ST 28 in Fig. 17), the points $(r, \delta, \theta)$ corresponding to each of such parameters E, E(1) and E(2) are searched starting from the low values thereof to calculate the position of the communication apparatus (2). Namely, the relevant points $(r, \delta, \theta)$ for each of the parameters E, E(1) and E(2) are searched in that order, and then the common point $(r, \delta, \theta)$ found for each of the parameters E, E(1) and E(2) indicates the solution (ST 29 ~ ST 37 in Figs. 17 and 18). In the case where there is no match, a retransmission request is transmitted to the communication apparatus (2), and then the process described above is repeated. Further, in the case where no match is found, the closest solution is chosen. At this time, if E, E(1) and E(2) are determined from Fig. 5, it is possible to determine the distance r.

In this regard, the flow charts in Figs. 16 through 18 show the operational steps carried out by the position detection portion 30, and these steps taken together form an embodiment of the position detection method of the present invention. In other words, the function of the position detection portion 30 is shown by the flow chart of Figs. 16 through 18. Further, when the position is detected in this way, the position data is stored, and it is also possible to output such position data to an output device such as a monitor or printer (not shown in the drawings).

In this way, because the communication apparatus (1) can identify the position of the communication apparatus (2) as a reference point, in the case where the communication apparatus (2) forms a portable terminal capable of motion, it is possible to determine the position and path of motion of the person holding the communication apparatus (2). Further, regardless of whether or not the communication apparatus (2) is moving, by determining the current position thereof, it is possible to control whether or not data will be transmitted from the communication apparatus (1) to the communication apparatus (2).

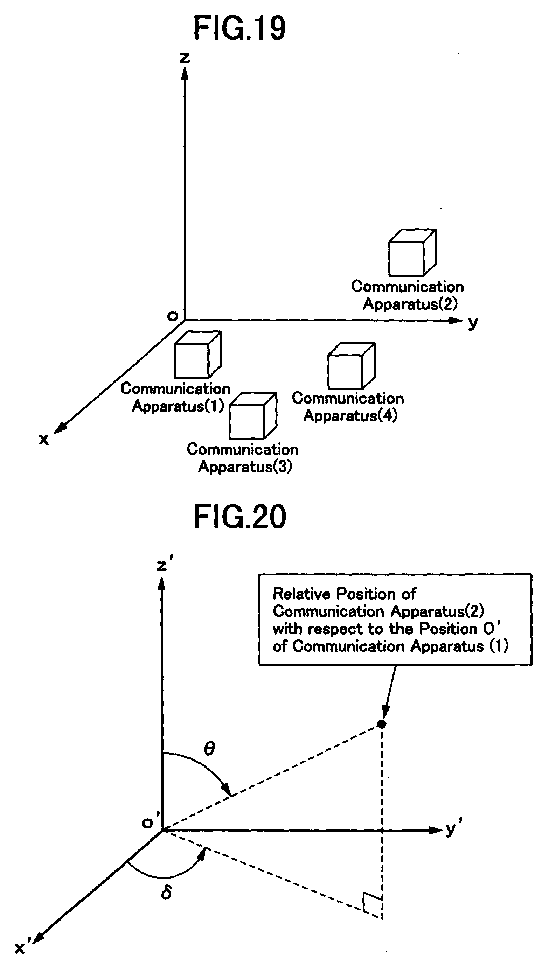

Next, a fourth embodiment will be described with reference to Figs. 19 and 20. In this regard, Fig. 19 is a map showing the relative positions of a group of communication apparatuses. In this embodiment, each of the communication apparatuses holds position data on all the communication apparatuses including itself and the other communication apparatuses, and this position data is in the form of rectangular coordinates from a reference origin 0 given by $(x, y, z) = (0,0,0)$. For example, the position data of the communication apparatuses shown in Fig. 19 is given by Table 1 below.

TABLE 1

| Communication Apparatuses | Coordinates |
|---|---|
| (1) | $(x1,y1,z1)$ |
| (2) | $(x2,y2,z2)$ |
| (3) | $(x3,y3,z3)$ |
| (4) | $(x4,y4,z4)$ |

Accordingly, in the example case where signals are transmitted from the communication apparatus (1) to the communication apparatus (2), the distance $R_{1-2}$ from the communication apparatus (1) to the communication apparatus (2) can be calculated by the following equation:

16

$$R_{1\_2} = \sqrt{(x_1 - x_2)^2 + (y_1 - y_2)^2 + (z_1 - z_2)^2} \qquad (21)$$

Further, the vector $V_{1\text{-}2}$ from the communication apparatus (1) to the communication apparatus (2) is as follows:

$$\overrightarrow{v}_{1\text{-}2} = \begin{bmatrix} x_2 - x_1 \\ y_2 - y_1 \\ z_2 - z_1 \end{bmatrix} \qquad \cdots (22)$$

Accordingly, the angle $\delta$ between the vector $V_{1\text{-}2}$ and the x axis, and the angle $\theta$ between the vector $V_{1\text{-}2}$ and the xy plane (horizontal plane) can be calculated as follows:

$$\delta = \tan^{-1}\left[\frac{y_2 - y_1}{x_2 - x_1}\right] \qquad (23)$$

$$\theta = \tan^{-1}\left[\frac{z_2 - z_1}{\sqrt{(x_2 - x_1)^2 + (y_2 - y_1)^2}}\right]$$

In this way, it is possible for the communication apparatus (1) to calculate the relative position of the communication apparatus (2) by means of an arithmetic process. Then, with such calculated position $(r, \delta, \theta)$ forming the initial condition, a data base related to the electric field strength is created. Namely, the correlation of the electric field strength with respect to the emission conditions (frequency $\omega$, phase $\phi$, output level V) of the data-transmitting communication apparatus (1) is calculated. Next, a search is carried out for the point where the electric field strength reaches a maximum, and then the control circuit of the communication apparatus (1) is set to establish the emission conditions that will create such searched maximum. Accordingly, by establishing the emission conditions in this way, an optimum communication environment is created when the communication apparatus (1) transmits data to the communication apparatus (2). Further, by using the position data of the communication apparatus (2) which forms the reception side, it is possible to create an optimum reception state without the need for feedback (reply signals) from the communication apparatus (2).

Further, it should be noted that the data shown in Table 1 for each of the communication apparatuses does not necessarily need to be possessed at the beginning of operations, and there are various ways to create such a data base. As an example, after each communication apparatus is established, a manual control can be carried out to record position data. For example, in the case where each communication apparatus possesses position data on at least its own position, one communication apparatus transmits a position data transmission request to each of the other communication apparatuses within the transmission area in accordance with a prescribed timing, and upon receiving this request, each of the other communication apparatuses transmits position data on its own position back to the communication apparatus making the transmission request. Then, upon receiving such position data, the communication apparatus creates a data base like that shown in Table 1.

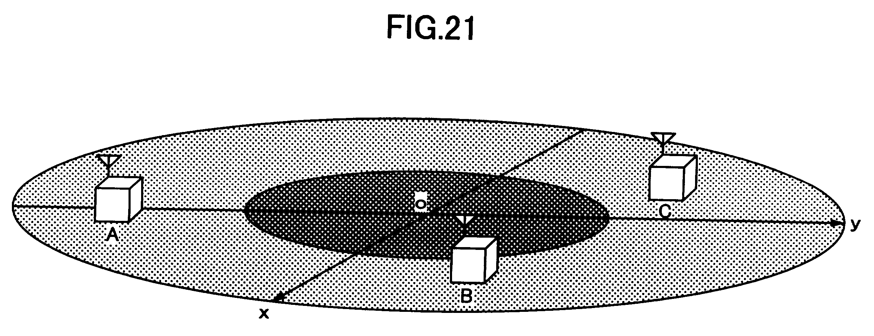

Next, a fifth embodiment will be described with reference to Figs. 21 ~ 23. For the sake of simplicity, Fig. 21 shows three communication apparatuses A, B and C arranged in a plane in a situation similar to that described in the first embodiment. Further, each of the communication apparatuses A, B and C are provided with a position detection function which uses the method described above in the third and fourth embodiments.

Accordingly, from the position data ( $(r, \delta, \theta,)$ or (x,y,z) ) obtained by the method described above, a data base is created related to the strength of E at such positions when the emission conditions are changed, and then this created data base is sorted for values of E.

Then, as was described above in the first embodiment, the interference pattern of the interfering electromagnetic waves emitted from the first and second antennas creates interference wave antinode regions were reception conditions are good, and interference wave node regions were reception is impossible. In actuality, even when there are no antinode regions and node regions, there are regions where reception is possible at some times and then not possible at other times. Namely, if Es represents the threshold electric field strength value that determines whether it will be possible or impossible for the communication apparatus to receive signals, then the communication apparatus will be able to receive signals when the reception level (electric field strength) is equal to or greater than the threshold value Es, but will not be able to receive signals when the threshold value Es is not satisfied.

Now, by adjusting the emission conditions, when data is transmitted from one of the communication apparatuses (functioning as a transmitter), in the case where a plurality of other communication apparatuses (functioning as receivers) are located within the transmission reach area, the communication apparatuses which want to receive the transmitted data are mixed with the communication apparatuses that do not want to receive the transmitted data. In this case, emission conditions are extracted to make the electric field strength exceed the threshold value Es at the positions of the communication apparatuses wanting to receive signals and to prevent the electric field strength from satisfying the threshold value Es at the positions of the communication apparatuses not wanting to receive signals, and then data is transmitted at such established emission conditions. In the case where there is a plurality of possible emission conditions for creating such electric field strength pattern, any one of such plurality of emission conditions can be selected, with the preferred choice being the emission conditions that create a maximum field strength at the reception positions.

In this way, the electromagnetic waves emitted from the transmitting communication apparatus form interference wave antinodes at the positions of the communication apparatuses wanting to communicate, and interference wave nodes at the positions of the communication apparatuses not wanting to communicate. Namely, because SDMA (Space Division Multiple Access) becomes possible, even in the case where only the position data of each communication apparatus can be detected, it is possible to make the transmitting communication apparatus communicate only with those communication apparatuses wanting to communicate even when such communication apparatuses are located in the vicinity of the transmitting communication apparatus together with other communication apparatuses not wanting to communicate. Further, if recognition codes or the like are also used in this method, it is possible to reliably improve security.

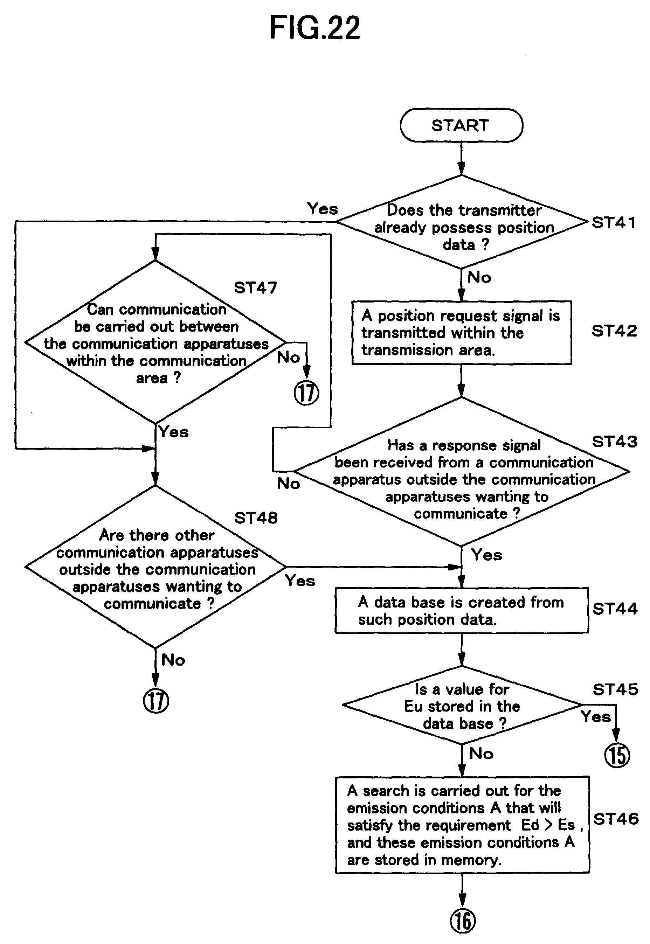

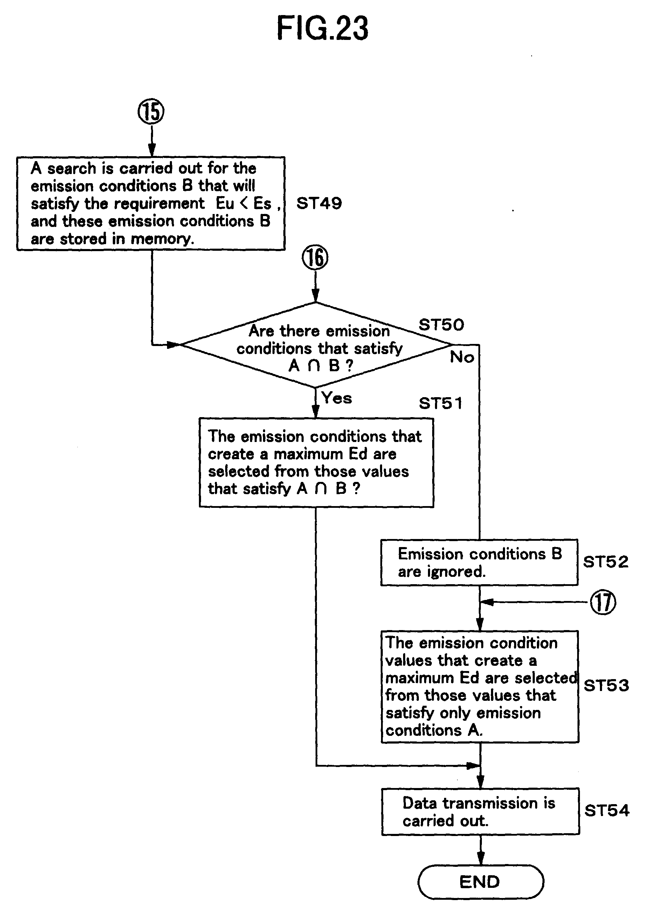

In this connection, the flow chart shown in Figs. 22 and 23 illustrate one example method which can be followed by a processing portion (i.e., the portion for determining and establishing emission conditions) for carrying out the process described above. In the example shown by this flow chart, it is assumed that each of the communication apparatuses possesses position data on its own position.

First, a judgement of whether or not position data of the receivers within the transmission area (e.g., data like that shown in Table 1) is already held by the transmitter (ST 41), and in the case where no such data is held, a position request signal is transmitted within the transmission area (ST 42). Next, each communication apparatus (receiver) that receives this position request signal transmits back its own position data as a response signal. Further, even though there are other communication apparatuses within the communication area, because these communication apparatuses are located at interference wave node positions, it is not possible for them to receive the position request signal, and as result, the communication apparatuses at the interference wave node positions will not transmit position data response signals.

Accordingly, in the case where position data is received only from the communication apparatuses that want to communicate, by emitting electromagnetic waves under the emission conditions (emission state) used when the position request signal was transmitted, it becomes possible to transmit data only to target communication apparatuses. Further, in the case where no response signals are received from the communication apparatuses wanting to communicate, it is possible to retransmit the position request signal, and in the case where a response signal is received from a communication apparatus outside of the communication apparatuses wanting to communicate, by changing the emission conditions based on such position data, it is possible to transmit signals only to prescribed communication apparatuses wanting to communicate.

At this point, a judgement of whether or not a response signal was received from a communication apparatus outside of the communication apparatuses wanting to communicate is carried out (ST 43). At this time, in the case where the received response signals include response signals from one or more communication apparatuses outside of the communication apparatuses wanting to communicate (where it is assumed that the emission conditions are changed and the process carried out at Step 42 is repeated in the case where response signals are also received from the communication apparatuses wanting to communicate, or in the case where the positions are known but no response signals are received from the communication apparatuses wanting to communicate), a data base is created from such position data. Namely, as described above, a data base is created showing the correlation of the electric field strength at the position of each communication apparatus (receiver) for the case where the emission conditions are changed.

Next, if Ed represents the reception signal level (electric field strength) at the positions of the communication apparatuses wanting to communicate, if Eu represents the reception signal level (electric field strength) at the positions of the communication apparatuses not wanting to communicate, and if Es represents the threshold electric field strength that determines whether or not reception is possible, then the emission conditions A are selected to satisfy the requirement Ed > Es (ST 45, ST 46), and the emission conditions B are selected to satisfy the requirement Eu < Es (ST 45, ST 49).

Namely, at Step 45 a judgement of whether or not the electric field strength value Eu for the communication apparatuses not wanting to communicate is stored in the data base is carried out, at Step 46 a search is carried out for the emission conditions A that will make the electric field strength value Ed for all the communication apparatuses wanting to communicate within the communication area greater than the threshold value Es, and at Step 49 a search is carried out for the emission conditions B that will make the electric field strength value Eu for all the communication apparatuses not wanting to communicate within the communication area smaller than the threshold value Es. In this regard, it should be noted that a plurality of possible emission conditions may exist for each of the emission conditions A, B.

In this way, after the emission conditions A, B have been selected, the process proceeds to Step 50, and a judgement of whether or not there are emission condition values that satisfy both emission conditions A, B, and in the case where such values exist (i.e., a YES judgement at ST 50), the particular values that create a maximum Ed are selected from those values that satisfy emission conditions A, B (ST 51). On the other hand, in the case where there are no emission conditions that satisfy both the emission conditions A, B, the process proceeds to Step 52, and then ignoring the emission conditions B, the particular values that create a maximum Ed are selected from those values that satisfy only emission conditions A (ST 52, ST 53). Then, after establishing such selected emission conditions, electromagnetic waves are emitted to transmit data (ST54).

On the other hand, in the case where a NO judgment is made at Step 43, namely, in the case where no response signal is received from outside the communication apparatuses wanting to communicate, a judgement of whether or not communication is possible between the communication apparatuses within the communication area is carried out (ST 47), and a judgement of whether or not there exist communication apparatuses outside the communication apparatuses wanting to communicate (ST 48). Then, in both the case where no communication is possible (i.e., a NO judgement at ST 47), and in the case where there exists no communication apparatus outside the communication apparatuses wanting to communicate (in which it is possible to make judgements based on previously obtained position data) (i.e., a NO judgement at Step 48), the process proceeds to Step 53, and the particular values that create a maximum Ed are selected from those values that satisfy emission conditions A. At this time, it is assumed that a process like that performed at Step 46 was carried out to select the emission conditions A. On the other hand, in the case where the opposite judgement is made at Step 48 (i.e., a YES judgement), the process proceeds to Step 44, and a data base is created.

As described above, in the present invention, synchronized transmission signals simultaneously emitted from a plurality of antennas are made to interfere with each other to generate a prescribed standing wave pattern (interference pattern) in free space, and by using the peak portions (antinode portions) and the vicinity around the peak portions of the electric field strength interference pattern created by the interfering transmission signals, it is possible to extend the transmission distance without increasing the output level of the emitted electromagnetic waves.

Further, if the emission state is adjusted when electromagnetic waves are emitted from the plurality of antennas, it becomes possible to change the interference pattern, and this makes it possible to reliably transmit data to any receiver located within the maximum transmission area.

Furthermore, if the interference pattern is changed based on response signals from the receivers, it is possible to establish an interference pattern that creates an optimum reception environment for the transmission target receivers.

Further, if the interference pattern is changed based on acquired position data of the receivers, it is possible to establish an interference pattern that creates an optimum reception environment for the transmission target receivers at the beginning of operations.

Moreover, if interference antinodes are created at the positions of the receivers wanting data transmission, and if interference nodes are created at the positions of the receivers not wanting data transmission, in the case where a plurality of receivers are located within the maximum transmission area, it is possible to transmit data only to specific receivers, and this improves security.

Further, if a switching function is provided to enable only one of the plurality of antennas to be used to transmit data, it becomes possible to use such single antenna to reliably and simply (from the fact that no interference pattern needs adjusting) transmit data to receivers located within a prescribed region (area) of space. Then, in the case of receivers located outside such region of space, the switching function enables the plurality of antennas to be selected to create an interference pattern that makes it possible to transmit data to the receivers located outside the prescribed region.

Furthermore, if reception data related to each reception state of the receivers when the receivers receive the interference waves emitted while the interference pattern is changed is sent back to the transmitter from the receivers, the transmitter can utilize this reception data and data related to the emission state to detect the position of the receivers. Accordingly, this position data can be used to make adjustments to the electromagnetic wave emission conditions to create an optimum reception environment for the receivers, or to create an interference pattern that makes it impossible for the receivers to receive transmission data.

Finally, it should be noted that the present invention is not limited to measurements concerning only the electric field strength of the electromagnetic waves, and in all the embodiments described above, it is possible to carry out all the processes and methods described above based on measurements of the magnetic field strength of the electromagnetic waves. Further, such processes and methods can be carried out based on both the electric field strength and the magnetic field strength of the electromagnetic waves.

**Claims**

1. A communication method, comprising the steps of:

   emitting electromagnetic waves from a plurality of transmission antennas provided in a communication apparatus; and
   utilizing the interference waves created by the interference between the electromagnetic waves emitted from the plurality of antennas to transmit data.

2. The communication method of Claim 1, further comprising the step of:

   adjusting the emission state of the electromagnetic waves emitted from the plurality of antennas in order to change the interference pattern of the interference waves so as to change the regions in space where transmission is possible.

3. The communication method of Claim 2, wherein:

   the emission state adjusting step is carried out based on response signals from at least one receiver.

4. The communication method of Claim 2, wherein:

   the emission state adjusting step is carried out based on acquired position data of at least one receiver.

5. The communication method of Claim 2, wherein:

   the emission state adjusting step is carried out to create interference wave antinodes at the positions of receivers wanting to receive the data transmitted from the communication apparatus, and interference wave nodes at the positions of receivers not wanting to receive the data transmitted from the communication apparatus.

6. The communication method of Claim 3, wherein:

   the emission state adjusting step is carried out to create interference wave antinodes at the positions of receivers wanting to receive the data transmitted from the communication apparatus, and interference wave nodes at the positions of receivers not wanting to receive the data transmitted from the communication apparatus.

7. The communication method of Claim 4, wherein:

   the emission state adjusting step is carried out to create interference wave antinodes at the positions of receivers wanting to receive the data transmitted from the communication apparatus, and interference wave nodes at the positions of receivers not wanting to receive the data transmitted from the communication apparatus.

8. The communication method of Claim 1, further comprising the step of:

   switching the transmission mode of the communication apparatus from a multiple antenna transmission mode to a single antenna transmission mode to enable the communication apparatus to transmit data using only one antenna.

9. The communication method of Claim 2, further comprising the step of:

   switching the transmission mode of the communication apparatus from a multiple antenna transmission mode to a single antenna transmission mode to enable the communication apparatus to transmit data using only one antenna.

10. A method of detecting the position of a receiver, comprising the steps of:

emitting electromagnetic waves from a plurality of transmission antennas provided in a communication apparatus;

utilizing the interference waves created by the interference between the electromagnetic waves emitted from the plurality of antennas to transmit data;

adjusting the emission state of the communication apparatus when electromagnetic waves are being emitted from the plurality of antennas in order to change the interference pattern of the interference waves so as to change the regions in space where transmission is possible;

transmitting reception data from the receiver to the communication apparatus, wherein the reception data is related to the reception state at the time the interference waves were received by the receiver while the interference pattern was being changed; and

detecting the position of the receiver based on the reception data received by the communication apparatus and on data related to the emission state of the communication apparatus.

11. A communication apparatus, comprising:

a plurality of transmission antennas;

means for creating an electromagnetic wave interference pattern in the surrounding space by the interference of electromagnetic waves emitted from the plurality of antennas; and

means for transmitting transmission data to at least one receiver using the interference waves that form the interference pattern.

12. The communication apparatus of Claim 11, further comprising:

control means for controlling the emission state of the electromagnetic waves emitted from the plurality of antennas in order to change the interference pattern of the interference waves so as to change the regions in space where transmission is possible.

13. The communication apparatus of Claim 12, wherein the emission state control means controls the emission state of the electromagnetic waves emitted from the antennas based on response signals from the one or more receivers in order to create an interference pattern which makes it possible for the one or more receivers to receive the transmission data transmitted from the communication apparatus.

14. The communication apparatus of Claim 13, further comprising storage means for storing position data related to the position of the one or more receivers, wherein the control means controls the emission state of the electromagnetic waves emitted from the antennas based on the position data stored in the storage means in order to create an interference pattern which makes it possible for the one or more receivers to receive the transmission data transmitted from the communication apparatus.

15. The communication apparatus of Claim 12, wherein the control means controls the emission state of the electromagnetic waves emitted from the antennas to create interference wave antinodes at the positions of receivers wanting to receive the data transmitted from the communication apparatus, and interference wave nodes at the positions of receivers not wanting to receive the data transmitted from the communication apparatus.

16. The communication apparatus of Claim 13, wherein the control means controls the emission state of the electromagnetic waves emitted from the antennas to create interference wave antinodes at the positions of receivers wanting to receive the data transmitted from the communication apparatus, and interference wave nodes at the positions of receivers not wanting to receive the data transmitted from the communication apparatus.

17. The communication apparatus of Claim 14, wherein the control means controls the emission state of the electromagnetic waves emitted from the antennas to create interference wave antinodes at the positions of receivers wanting to receive the data transmitted from the communication apparatus, and interference wave nodes at the positions of receivers not wanting to receive the data transmitted from the communication apparatus.

18. The communication apparatus of Claim 12, further including switching means for switching the transmission mode of the communication apparatus from a multiple antenna transmission mode to a single antenna transmission mode to enable the communication apparatus to transmit data using only one antenna.

19. The communication apparatus of Claim 13, further including switching means for switching the transmission mode of the communication apparatus from a multiple antenna transmission mode to a single antenna transmission mode to enable the communication apparatus to transmit data using only one antenna.

20. The communication apparatus of Claim 12, further including position detection means for detecting the position of the one or more receivers based on reception data transmitted to the communication apparatus from the one or more receivers and on data related to the emission state of the communication apparatus, wherein the reception data transmitted from the one or more receivers includes data on the reception state of the one or more receivers at the time the interference waves were received by the receiver while the interference pattern was being changed.

21. The communication apparatus of Claim 13, further including position detection means for detecting the position of the one or more receivers based on reception data transmitted to the communication apparatus from the one or more receivers and on data related to the emission state of the communication apparatus, wherein the reception data transmitted from the one or more receivers includes data on the reception state of the one or more receivers at the time the interference waves were received by the receiver while the interference pattern was being changed.

22. The communication apparatus of Claim 14, further including position detection means for detecting the position of the one or more receivers based on reception data transmitted to the communication apparatus from the one or more receivers and on data related to the emission state of the communication apparatus, wherein the reception data transmitted from the one or more receivers includes data on the reception state of the one or more receivers at the time the interference waves were received by the receiver while the interference pattern was being changed.

23. The communication apparatus of Claim 15, further including position detection means for detecting the position of the one or more receivers based on reception data transmitted to the communication apparatus from the one or more receivers and on data related to the emission state of the communication apparatus, wherein the reception data transmitted from the one or more receivers includes data on the reception state of the one or more receivers at the time the interference waves were received by the receiver while the interference pattern was being changed.

24. The communication apparatus of Claim 18, further including position detection means for detecting the position of the one or more receivers based on reception data transmitted to the communication apparatus from the one or more receivers and on data related to the emission state of the communication apparatus, wherein the reception data transmitted from the one or more receivers includes data on the reception state of the one or more receivers at the time the interference waves were received by the receiver while the interference pattern was being changed.

# FIG.1

6

Control Portion

100

1

2

Transmission Signal

3

4

5

d

# FIG.2

—— Wave Antinodes

----- Wave Nodes

● Transmission Source

d

1

2

# FIG.3

# FIG.4

# FIG.5

Distance-Electric Field Strength Relationship
(At Same Supplied Power Level)

EP 1 077 536 A2

# FIG.6

10

17

11

Control Circuit

15a

13

12

Transmission System

14

15b

Recepion System

## FIG.7

# FIG.8

200

Phase Control Signal 2

Phase Control Signal 1

Antenna Switching Signals

Transmission Data

Control Data from Communication Apparatus (1)

Transmission / Reception Switching Signals

Control Circuit — 17

$$\frac{dE}{dt}, \frac{d^2E}{dt^2}$$

$$\frac{dE}{dt}$$

E

Differentiating Circuit

E

Reception Level Monitor

28

25

14'

Wave Detection Circuit

22

Transmission / Reception Selector Switch

13'

Transmission Circuit System

SW

24

ANT1

11

1st Phase Converter

19a

ANT2

12

2nd Phase Converter

19b

EP 1 077 536 A2

FIG.9

Communication
Apparatus(1)

Communication
Apparatus(2)

# FIG.10

```
                    START

              ①                           ①

        ┌──────────────────┐        ┌────────────────────────┐
        │  Is the system in a │ ST1    │                    ST8 │
        │  transmission mode? │        │ Communication apparatus is │
        │ (Is the system not in a │───── │ switched to the transmission │
        │   reception mode ?) │ Yes    │ mode, and a sweep stop │
        └──────────────────┘        │ signal is transmitted. │
                │ No                 └────────────────────────┘
      ②        │                              │
        ┌──────────────────┐                  END
        │  Was reception signal │ ST2
        │ transmitted in a normal │──── Yes
        │      mode ?        │
        └──────────────────┘
                │ No
        ┌──────────────────┐
        │   dE/dt≠0         │ ST5
        │   d²E/dt²<0       │──── Yes
        └──────────────────┘        ┌──────────────────┐
                │ No                 │ Is reception level E │ ST3
        ┌──────────────────┐        │ greater than or equal to the │── Yes
        │ Is the reception level │ ST6  │   threshold value ? │
        │ greater than or equal to the │── ① └──────────────────┘
        │    threshold level ? │ Yes        │ No
        └──────────────────┘
                │ No                 ┌────────────────────────┐
        ┌──────────────────┐ ST7    │                    ST4 │
        │ Communication apparatus is │  │ Communication apparatus is │
        │ switched to a sleep mode to make │ │ switched to the transmission │
        │ reception impossible. │       │ mode, and a signal requesting │
        └──────────────────┘        │ that the transmission mode │
                │                    │ be switched to the diversity │
               END                   │ mode is sent to the other │
                                     │ communication apparatus. │
                                     └────────────────────────┘
                                        │               │
                                        ②              END
```

# FIG.11

$\dfrac{d^2E}{dt^2} < 0$

$\dfrac{dE}{dt} = 0$

$\dfrac{dE}{dt} > 0$

$\dfrac{dE}{dt} < 0$

$\dfrac{d^2E}{dt^2} > 0$

$\dfrac{d^2E}{dt^2} > 0$

Reception Level |E| at Position of Receiver

Phase $\theta$ of Transmitter

# FIG.12

START

↓

Is the system in a reception mode ?
(Is the system not in a transmission mode ?)   ST11
— Yes →

↓ No

Is transmission mode a normal transmission mode ?   ST12
— Yes →

↓ No

Has a sweep stop signal been received ?   ST15
— Yes →

↓ No

③

Has a sweep start signal been received ?   ST13
— Yes →
↓ No
END

### ST16
Phase is fixed in view of communication delay time.
↓
END

### ST14
Transmission mode is switched to the diversity mode, and a sweep is started.
↓
③

# FIG.13

EP 1 077 536 A2

300

Phase Control Signal 2

Phase Control Signal 1

Transmission Data

Emission Conditions

Control Circuit — 17

Transmission / Reception
Switching Signals

30

$\dfrac{dE}{dt}, \dfrac{d^2E}{dt^2}$          $\dfrac{dE}{dt}$

Position
Detection
Portion

E

25

14'

Differentiating
Circuit

E

Reception
Level Monitor

ANT1

11

1st Phase
Converter

Wave
Detection
Circuit

28

19a

22

ANT2

12

13'

Transmission / Reception
Selector Switch

2nd Phase
Converter

Transmission
Circuit
System

19b

# FIG.14

Relative Position of
Communication Apparatus(2)
with respect to the Position O
of Communication Apparatus (1)

# FIG.15

# FIG.16

```
        ┌─────────────┐
        │    START    │
        └─────────────┘
               │
               ▼
┌────────────────────────────────┐
│ Emission state parameters      │
│ (frequency, phase, output level)│   ST21
│ of the transmitter are established.│
└────────────────────────────────┘
               │
               ▼
┌────────────────────────────────┐
│ 3-D data base of E based on the│
│ parameters (r, δ, θ) is created│   ST22
│ from initial values.           │
└────────────────────────────────┘
               │
               ▼
┌────────────────────────────────┐
│ Values of E are sorted for space│
│ coordinates (r, δ, θ).         │   ST23
└────────────────────────────────┘
               │
               ▼
┌────────────────────────────────┐
│ 3-D data base of E⁽¹⁾ based on the│
│ parameters (r, δ, θ) is created│   ST24
│ from initial values.           │
└────────────────────────────────┘
               │
               ▼
┌────────────────────────────────┐
│ Values of E⁽¹⁾ are sorted for space│
│ coordinates (r, δ, θ).         │   ST25
└────────────────────────────────┘
               │
               ▼
              (11)
```

**ST21** — Emission state parameters (frequency, phase, output level) of the transmitter are established.

**ST22** — 3-D data base of E based on the parameters $(r, \delta, \theta)$ is created from initial values.

**ST23** — Values of E are sorted for space coordinates $(r, \delta, \theta)$.

**ST24** — 3-D data base of $E^{(1)}$ based on the parameters $(r, \delta, \theta)$ is created from initial values.

**ST25** — Values of $E^{(1)}$ are sorted for space coordinates $(r, \delta, \theta)$.

# FIG.17

⑪

| 3-D data base of $E^{(2)}$ based on the parameters ( r, $\delta$ , $\theta$ ) is created from initial values. | ST26 |

| Values of $E^{(2)}$ are sorted for space coordinates ( r, $\delta$ , $\theta$ ). | ST27 |

⑭ → Have E, $E^{(1)}$ and $E^{(2)}$ been received ?   ST28   No

Yes

| A search is made for the coordinates ( r, $\delta$ , $\theta$ ) that will give the quantity $| E - E_{r\delta\theta} |$ a minimum value for the received E value. | ST29 |

No   Does such ( r, $\delta$ , $\theta$ ) exist ?   ST30

⑫

Yes

⑬

| A request for retransmission is made. | ST38 |

⑭

# FIG.18

⑬

| ST31 |
| The searched value ($r$, $\delta$, $\theta$) is stored. |

ST31

| A search is made for the coordinates ($r$, $\delta$, $\theta$) that will give the quantity $|E^{(1)} - E^{(1)}{}_{r\delta\theta}|$ a minimum value for the received $E^{(1)}$ value. |

ST32

Does such ($r$, $\delta$, $\theta$) exist ? —— ST33 ⑫
No

Yes

| A search is made for the coordinates ($r$, $\delta$, $\theta$) that will give the quantity $|E^{(2)} - E^{(2)}{}_{r\delta\theta}|$ a minimum value for the received $E^{(2)}$ value. |

ST34

Does such ($r$, $\delta$, $\theta$) exist ? —— ST35 ⑫
No

Yes

Does a common point ($r$, $\delta$, $\theta$) exist for each of the parameters E, $E^{(1)}$ and $E^{(2)}$ indicates ? —— ST36 ⑫
No

Yes

| The position is determined. |

ST37

( END )

# FIG.19

Communication
Apparatus(2)

Communication
Apparatus(1)

Communication
Apparatus(4)

Communication
Apparatus(3)

# FIG.20

Relative Position of
Communication Apparatus(2)
with respect to the Position O'
of Communication Apparatus (1)

38

FIG.21

# FIG.22

START

Does the transmitter already possess position data ? — ST41

— Yes → → No

A position request signal is transmitted within the transmission area. — ST42

Can communication be carried out between the communication apparatuses within the communication area ? — ST47

— No → ⑰

— Yes ↓

Has a response signal been received from a communication apparatus outside the communication apparatuses wanting to communicate ? — ST43

— No

— Yes ↓

Are there other communication apparatuses outside the communication apparatuses wanting to communicate ? — ST48

— Yes →

— No ↓ ⑰

A data base is created from such position data. — ST44

Is a value for Eu stored in the data base ? — ST45

— Yes → ⑮

— No ↓

A search is carried out for the emission conditions A that will satisfy the requirement Ed > Es, and these emission conditions A are stored in memory. — ST46

⑯

# FIG.23

⑮

A search is carried out for the
emission conditions B that will
satisfy the requirement Eu < Es ,
and these emission conditions B
are stored in memory.

ST49

⑯

Are there emission
conditions that satisfy
A ∩ B ?

ST50

No

Yes

ST51

The emission conditions that
create a maximum Ed are
selected from those values
that satisfy A ∩ B ?

Emission conditions B
are ignored.

ST52

⑰

The emission condition
values that create a
maximum Ed are selected
from those values that
satisfy only emission
conditions A.

ST53

Data transmission is
carried out.

ST54

END